# EUROPÄISCHE PATENTSCHRIFT

(11) **EP 2 577 414 B1**
(45) Veröffentlichungstag und Bekanntmachung des Hinweises auf die Patenterteilung: **04.07.2018**
(21) Anmeldenummer: 11743412.6
(22) Anmeldetag: 30.05.2011
(51) Int. Cl.: B25J 13/06, B25J 9/16, G05B 19/427

(54) **VERFAHREN UND STEUERUNGSSYSTEM ZUM PROGRAMMIEREN ODER VORGEBEN VON BEWEGUNGEN ODER ABLÄUFEN EINES INDUSTRIEROBOTERS**
METHOD AND CONTROL SYSTEM FOR PROGRAMMING OR SPECIFYING MOTIONS OR SEQUENCES OF AN INDUSTRIAL ROBOT
PROCÉDÉ ET SYSTÈME DE COMMANDE POUR PROGRAMMER OU PRESCRIRE DES MOUVEMENTS OU PROCESSUS D'UN ROBOT INDUSTRIEL

(30) Priorität: 31.05.2010 AT 8822010
(43) Veröffentlichungstag der Anmeldung: 10.04.2013
(73) Patentinhaber: KEBA AG, 4041 Linz (AT)
(72) Erfinder: KÖGL, Peter, A-4020 Linz (AT); LEHNER, Georg, A-4020 Linz (AT); MITTERMAYER, Christoph, A-3400 Weidling/Klosterneuburg (AT)
(74) Vertreter: Burger, Hannes
(86) Internationale Anmeldenummer: PCT/AT2011/000247
(87) Internationale Veröffentlichungsnummer: WO 2011/150440

(56) Entgegenhaltungen:
- EP-A1- 1 588 806
- EP-A2- 1 738 881
- AT-U1- 10 676
- JP-A- 2000 094 369
- US-A- 6 019 606

## Beschreibung

Die Erfindung betrifft ein Verfahren zum Programmieren oder Vorgeben von Bewegungen oder Abläufen eines Industrieroboters, sowie ein händisch zu führendes Bewegungsvorgabemittel und ein Steuerungssystem für den genannten Zweck, wie dies in den Ansprüchen 1, 16, 18 und 19 angegeben ist.

Aus der DE 10 2004 020 099 A1 bzw. der EP 1 588 806 B1 ist ein gattungsgemäßes Verfahren und eine gattungsgemäße Vorrichtung zum Programmieren oder Vorgeben von Bewegungen oder Abläufen eines Industrieroboters bekannt. Entsprechend diesem bekannten System ist ein handgeführtes Beeinflussungsmittel vorgesehen, mit welchem ein mehrachsiger Industrieroboter steuerungstechnisch beeinflusst werden kann. Hierzu wird die Position und Lage bzw. Orientierung des Beeinflussungsmittels im Raum gemessen und zum Beeinflussen des Industrieroboters verwendet. Erfindungsgemäß sollen dabei abwechselnd Bewegungen des händisch geführten Beeinflussungsmittels und zugeordnete Bewegungen des Industrieroboters durchgeführt werden. Durch das vorgeschlagene Zerlegen der Bewegungen des Industrieroboters in kurze, jeweils durch das Beeinflussungsmittel beeinflusste Teilbewegungen, wird sich trotz physikalisch bedingter Ungenauigkeiten der verwendeten Sensorik, insbesondere einer Inertial-Sensorik, eine relativ genaue, sichere und intuitive Beeinflussung, insbesondere Bewegungsprogrammierung, von Industrierobotern erreicht. Ferner wird aufgezeigt, dass nach erfolgter Bewegungsaufzeichnung unter Verwendung des händisch zu führenden Beeinflussungsmittels eine Freigabe der zugeordneten Bewegung des Industrieroboters vorzunehmen sei. Diese Freigabe erfolgt dadurch, dass die Bedienperson eine Bestätigungseinrichtung am händisch zu führenden Beeinflussungsmittel, insbesondere eine bestimmte Taste, betätigt, die der Zustimmtaste eines Bedien-Handgerätes entspricht. Die mit dieser Vorgangsweise bzw. mit diesem System erzielbare Sicherheit gegenüber Personen- oder Sachschäden ist ebenso wie die Ergonomie und die verfügbare Informations- und Funktionsvielfalt nur bedingt zufrieden stellend.

Weiters beschreibt die DE 32 23 896 A1 ein Verfahren und eine Anordnung zur Erstellung von Programmen für bahngesteuerte Industrieroboter. Dabei ist eine händisch zu führende Abtasteinrichtung vorgesehen, mit der die zu programmierende Bewegungsbahn von Hand abgefahren wird. Die relative Position und Orientierung dieser Abtasteinrichtung wird durch eine Auswerteeinrichtung in Form elektrischer Daten abgespeichert. Die Position und Orientierung der händisch geführten Abtasteinrichtung, welche als Handgerät ausgeführt und mechanisch nicht an die Auswerteeinrichtung gebunden ist, wird mit Hilfe von in der Abtasteinrichtung integrierter Mittel unmittelbar erfasst und in elektrische Daten umgewandelt. Die integrierten Mittel können dabei durch drei in der händisch geführten Abtasteinrichtung enthaltene Kreisel mit senkrecht zueinander orientierten Achsen und mittels dreier in der Abtasteinrichtung enthaltener Beschleunigungsaufnehmer mit senkrecht zueinander orientierten Aufnahmerichtungen gebildet sein. Die entsprechenden Positions- und/oder Orientierungs- bzw. Bewegungsdaten der Abtasteinrichtung werden drahtgebunden oder drahtlos zur Auswerteeinrichtung übertragen, in der die die Bahn bestimmenden Größen ermittelt und in für die Robotersteuerung geeignete Daten umgesetzt und gespeichert werden. Anstelle der Ausbildung von integrierten Mitteln zur Erfassung der Position und Orientierung der Abtasteinrichtung im Raum wurde auch vorgeschlagen, optisch wirksame Mittel, beispielsweise Lichtquellen vorzusehen, welche mit die Ortsänderungen dieser Mittel erkennender, ortfester optischer Einrichtungen, beispielsweise Fernsehkameras, erfasst werden. Auch diese Ausführung ist im Hinblick auf potentiell sicherheitskritische Bewegungen oder Abläufe des per Hand gesteuerten Industrieroboters wenig zufrieden stellend.

Die JP 2000 094369 A offenbart ein Teaching-System für Industrieroboter, bei welchem ein manuell geführtes Positionsanzeigemittel in Bezug auf dessen Position und Ausrichtung im Raum detektiert und von einer elektronischen Auswertungsvorrichtung ausgewertet wird. Die entsprechenden Positions- und Orientierungsdaten stellen dann einen Teil der Steuerdaten für den Industrieroboter dar. Ein mobiles Eingabe- und Anzeigemittel ist dabei via eine drahtlose Datenverbindung mit der elektronischen Auswertungsvorrichtung zur Bestimmung der Positions- und Orientierungsdaten des stiftförmigen Positionsanzeigemittels verbunden. Dabei wird mittels Laserstrahlen, sphärischen Oberflächen und mittels Mikrowellensendern im Positionsanzeigemittel sowie mittels einem Mikrowellenempfänger an der Auswertungsvorrichtung die Position bzw. Orientierung des stiftförmigen Positionsanzeigemittels ermittelt. Die damit erzielbare Zuverlässigkeit bzw. Funktionssicherheit der Positionserfassung ist jedoch nur bedingt zufriedenstellend. Außerdem ist der hardwaretechnische Aufwand zur Umsetzung einer derartigen Vorrichtung relativ hoch, wodurch sich die entsprechende Vorrichtung in der Praxis nur schwer bewährt.

Die US 6,019,606 A beschreibt ein weiteres System zum sogenannten Teachen von Industrierobotern. Dabei wird ein händisch geführtes Dummy-Werkzeug über eine mehrfach angelenkte Seil- bzw. Drahtverbindung mit einer Sensoranordnung verbunden. Diese elektromechanische Sensoranordnung umfasst eine Mehrzahl von Drehwinkelsensoren in Form von Potentiometern, um damit die Orientierung des seilgekoppelten Dummy-Werkzeuges aufnehmen bzw. auswerten zu können. Mittels einer Analog/Digital-Konverterschaltung und einer nachgeschalteten Auswertungsvorrichtung wird dann auf die Stellung bzw. Lage des Dummy-Werkzeuges Rückschluss gezogen. Die datentechnische Auswertung von Seiten der Auswertungsvorrichtung erfolgt dabei nur dann, wenn durch Drücken eines Kommandobuttons an einem Handschalter ein Befehl zur Auswertung der jeweiligen Werte der diversen Potentiometer vorliegt. Das Dummy-Werkzeug und der Handschalter mit dem Kommandobutton sind dabei datentechnisch voneinander unabhängige Elemente, zwischen welchen keine signaltechnische Verbindung vorliegt. Dieses Teaching-System ist dabei nur für sicherheitstechnisch unbedenkliche Systeme geeignet. Ein Vorgeben von Bewegungsabläufen durch das Dummy-Werkzeug und ein simultanes Ausführen der entsprechenden Bewegung durch den Industrieroboter ist dabei nicht vorgesehen. Insbesondere erfolgt entsprechend diesem bekannten System eine Zwischenspeicherung der mit dem Dummy-Werkzeug vorab generierten Positionsdaten. Die Praktikabilität dieses Systems ist dadurch nur eingeschränkt vorhanden.

Das Dokument AT 10 676 U1, welches auf die Anmelderin zurückgeht, beschreibt ein Verfahren zum Betreiben eines mobilen Handbediengerätes für die Abgabe oder Freischaltung von potentiell gefahrbringenden Steuerkommandos, sowie ein entsprechendes Handbediengerät. Dabei wird an einem Handbediengerät, welches eine Mehrzahl von wahlweise betätigbaren Sicherheitsschalteinrichtungen aufweist, mittels einem speziellen Auswahlverfahren den jeweiligen Sicherheitsschalteinrichtungen gezielt ein Aktiv- oder Inaktivmodus zugeordnet. Verwirrungen bzw. Unklarheiten in Bezug auf die Funktionalität bzw. in Bezug auf die Aktivierung oder Deaktivierung von Sicherheitsschalteinrichtungen werden dadurch hintan gehalten. Darüber hinaus wird dadurch die ordnungsgemäße Funktion der entsprechenden Sicherheitsschalteinrichtungen vorab überprüft und damit eine erhöhte Betriebs- bzw. Funktionssicherheit des Handbediengerätes gewährleistet.

Der vorliegenden Erfindung liegt die Aufgabe zugrunde, ein Verfahren zum Programmieren oder Vorgeben von Bewegungen oder Abläufen eines Industrieroboters zu schaffen, welches erhöhten Sicherheitsanforderungen in Bezug auf potentiell gefährdende Bewegungen oder Abläufe eines Industrieroboters gerecht wird und der Bedienperson dennoch ein möglichst komfortables Programmieren oder Vorgeben von komplexen Bewegungen, Abläufen oder Funktionen eines Industrieroboters ermöglicht. Darüber hinaus ist es eine Aufgabe der Erfindung, ein entsprechendes Bewegungsvorgabemittel und Steuerungssystem anzugeben.

Die erstgenannte Aufgabe der Erfindung wird durch ein Verfahren entsprechend den Merkmalen im Anspruch 1 gelöst.

Erfindungsgemäß ist somit eine kombinierte Verwendung eines mobilen Handterminals und eines händisch zu führenden Bewegungsvorgabemittels zum sogenannten Teachen bzw. Programmieren oder zum Vorgeben von Bewegungen eines Industrieroboters und von vergleichbaren technischen Einrichtungen, insbesondere industriellen Manipulatoren oder Handlinggeräten, vorgesehen. Wesentlich ist dabei, dass die Sicherheitstechnik, insbesondere die Sicherheitsschalteinrichtung und vorzugsweise auch die entsprechende Auswerteeinrichtung, im mobilen Handterminal ausgebildet bzw. dem mobilen Handterminal zugeordnet ist. Demnach ist die Sicherheitstechnik durch das mobile Handterminal umgesetzt, indem dessen Zustimmtaster und/oder dessen Not-Aus-Schaltvorrichtung die sicherheitstechnischen Aspekte mit hoher Zuverlässigkeit erfüllt. Ein weiterer Vorteil der erfindungsgemäßen Maßnahme liegt darin, dass das händisch zu führende Bewegungsvorgabemittel baulich relativ kompakt aufgebaut werden kann, da keine Sicherheitsschalteinrichtung, insbesondere kein Zustimmtaster mit erhöhter Funktions- oder Fehlersicherheit in das händisch zu führende Bewegungsvorgabemittel integriert werden muss. Darüber hinaus bleibt ein erfindungsgemäßes Bewegungsvorgabemittel möglichst ergonomisch bedienbar, da mit der führenden Hand bzw. mit der die Bewegungsvorgabe ausführenden Hand nicht gleichzeitig auch ein Zustimmtaster betätigt werden muss. Außerdem kann dadurch die signal- bzw. datentechnische Verbindung zwischen dem händisch zu führenden Bewegungsvorgabemittel und dem mobilen Handterminal technisch relativ einfach gehalten werden, da keine sicherheitskritischen Informationen bzw. Daten übertragen werden müssen. Insgesamt wird dadurch ein bezüglich Personen- oder Sachschäden besonders sicheres Vorgeben bzw. Steuern von potentiell sicherheitskritischen Bewegungen oder Abläufen eines Industrieroboters erzielt. Trotz dieses Sicherheitsgewinnes ist ein besonders komfortables Programmieren oder Vorgeben von Bewegungen oder Abläufen eines Industrieroboters mit einem baulich relativ kleinen, leichten und technisch möglichst einfachen Bewegungsvorgabemittel erzielt, nachdem dieses Bewegungsvorgabemittel mit einem leistungsfähigen, systemerprobten, mobilen Handterminal funktionell kombiniert bzw. zu einer Funktionseinheit gepaart wird. Nicht zuletzt wird durch die erfindungsgemäße Vorgangsweise ein sicheres und komfortables System geschaffen, welches noch dazu relativ kostengünstig aufgebaut werden kann bzw. eine optionale Erweiterung mit einem händisch zu führenden Bewegungsvorgabemittel ermöglicht.

Ein weiterer Vorteil liegt darin, dass dadurch von der Bedienperson bewusst gesteuert bzw. selektiert werden kann, welche Bewegungsvorgaben bzw. Steuerbefehle, welche mit dem Bewegungsvorgabemittel initiiert werden, letztendlich vom Industrieroboter auszuführen sind. Hierzu ist in einfacher und intuitiver Art und Weise zusätzlich noch die Sicherheitsschalteinrichtung am mobilen Handterminal entsprechend zu aktivieren bzw. gleichzeitig zu betätigen. Insbesondere können durch das zusätzliche Bedienelement am händisch zu führenden Bewegungsvorgabemittel unbeabsichtigte Auslösungen von Bewegungen oder Veränderungen von Zuständen ausgeschlossen werden, da die Bedienperson bewusst das entsprechende Bedienelement am mobilen Bewegungsvorgabemittel in definierter Art und Weise zu betätigen hat, um die beabsichtigte Zustandsveränderung des Industrieroboters tatsächlich auszulösen. Dadurch wird das Bedienkonzept in Bezug auf Fehlbedienungen nochmals fehlersicherer und zugleich intuitiver bzw. rascher erlern- und anwendbar.

Durch die Maßnahmen nach Anspruch 2 und/oder 3 wird ein Bedienkonzept bzw. Bediensystem erzielt, welches den Anforderungen an eine sichere und dennoch komfortable Bedienung von potentiell sicherheitskritischen Bewegungen oder Abläufen eines Industrieroboters oder einer vergleichbaren technischen Einrichtung in vorteilhafter Art und Weise Rechnung trägt. Einerseits können dadurch neben der Funktionalität zur Bewegungs- oder Ablaufsteuerung eines Industrieroboters auch detaillierte Informationen über den Betriebszustand oder Status des Industrieroboters ausgelesen und von der Bedienperson validiert bzw. verändert werden. Das mobile Handterminal ermöglicht dabei eine vielschichtige und erforderlichenfalls auch tiefgreifende Beobachtung und Veränderung von Parametern und Betriebszuständen des dem Industrieroboter zugeordneten Steuerungssystems. Üblicherweise relativ großflächige Anzeige- und Bedienelemente am mobilen Handterminal legen dabei den Grundstein für eine umfassende Mensch-Maschine-Schnittstelle (HMI). Von diesem mobilen Handterminal können dabei auch die sicherheitstechnischen Anforderungen optimal erfüllt werden. Das mobile Handterminal, welches die Sicherheitstechnik enthält, fungiert dabei quasi als "Mutterschiff" bzw. als "Master" für das funktional zugeordnete, baulich jedoch eigenständige, händisch zu führende Bewegungsvorgabemittel. Das händisch zu führende Bewegungsvorgabemittel stellt somit eine funktionale Erweiterung, insbesondere ein technisches Zusatzmodul zur optimierten Vorgabe oder Programmierung von Bewegungen oder Abläufen eines Industrieroboters dar. Die Sicherheitstechnik kann dabei in bewährter Art und Weise besonders funktionszuverlässig in das mobile Handterminal implementiert werden, während das händisch zu führende Bewegungsvorgabemittel von sicherheitstechnisch aufwändigen bzw. komplexen Sicherheitstechnologien weitgehendst befreit bleibt bzw. befreit werden kann.

Die systemgemäße Zweihandbedienung schafft dabei die Grundlage für eine möglichst intuitive Handhabung und einen speziell auf die Vorgabe oder Programmierung von Bewegungen oder Abläufen abgestellten, hochkonzentrierten und exakten Umgang mit dem baulich gesondert ausgeführten Bewegungsvorgabemittel. Dennoch bleibt die Sicherheitstechnik in der zweiten Hand der Bedienperson stets rasch und jederzeit griffbereit bzw. aktivierbar. Im Fall einer Gefahrensituation oder infolge einer Paniksituation kann die Bedienperson rasch und zuverlässig die Sicherheitstechnik aktivieren, insbesondere den Zustimmtaster unverzüglich loslassen bzw. vielfach unbewusst in eine Abschaltstellung gelangen, insbesondere den Zustimmtaster in eine sogenannte Panikstellung überführen bzw. durchdrücken. Während sich die Bedienperson also mit einer Hand auf die Ablauf- oder Bewegungsvorgabe in Verbindung mit dem Bewegungsvorgabemittel konzentriert, kann die zweite Hand zur jederzeitigen und eindeutigen Stillsetzung oder Abschaltung der jeweiligen technischen Einrichtung herangezogen werden. Während das händisch zu führende Bewegungsvorgabemittel von einem Rechtshänder zweckmäßigerweise von der rechten Hand gehalten oder geführt wird, wird das mobile Handterminal mit der unmittelbar zugreifbaren Sicherheitsschalteinrichtung von der linken Hand der Bedienperson ergriffen oder gehalten bzw. getragen. Umgekehrt kann das händisch zu führende Bewegungsvorgabemittel bei einem Linkshänder üblicherweise von der linken Hand gehalten und plangemäß bzw. zielgenau geführt werden, während gleichzeitig das mobile Handterminal mit der unmittelbar zugreifbaren Sicherheitsschalteinrichtung von der rechten Hand ergriffen oder gehalten bzw. getragen wird, ohne dabei dem mobilen Handterminal per se besondere Aufmerksamkeit schenken zu müssen. Die Konzentration der Bedienperson kann also auf das händisch zu führende Bewegungsvorgabemittel fokussiert werden, ohne einen Sicherheitsverlust in Bezug auf eine möglichst rasche bzw. unmittelbare Abschaltung oder Stillsetzung des Industrieroboters zu verursachen. Verfahrensgemäß liegt eine klare Funktions- bzw. Zuständigkeitstrennung zwischen dem Bewegungsvorgabemittel einerseits und dem mobilen Handterminal andererseits vor, obwohl die genannten Vorrichtungen zueinander in funktionaler Wechselwirkung stehen bzw. treten können.

Ein wesentlicher Vorteil des anspruchsgemäßen Bedien- bzw. Steuerungskonzeptes, welches aus einem praxiserprobten, beinahe standardmäßigen mobilen Handterminal und einem als Zusatzmodul fungierenden Bewegungsvorgabemittel zusammengesetzt ist, liegt auch darin, dass das mobile Handterminal gegebenenfalls auch als Basis- bzw. Alternativkomponente verwendet werden kann, um potentiell gefahrbringende Bewegungen oder Abläufe vorzugeben oder zu programmieren. Demnach kann mit dem mobilen Handterminal auch eine Grunderfahrung im Umgang mit industriellen Robotern gesammelt werden bzw. bei manchen Anwendern bereits bestehen. Das händisch zu führende Bewegungsvorgabemittel stellt sodann eine Zusatzkomponente in Form einer evolutionären Weiterentwicklung dar, welches auf dem Bedienkonzept der Bedienung mit dem mobilen Handterminal aufbaut. Für viele Anwender ist daher die Einlernphase deutlich kürzer bzw. ist eine verbesserte Akzeptanz im Umgang mit dem händisch zu führenden Bewegungsvorgabemittel vor allem bei langfristigen Anwendern des bisher gewohnten, mobilen Handterminals erzielbar. Langwierige und aufwändige Einschulungsmaßnahmen können somit vermieden werden. Dies vor allem aufgrund des intuitiven Bedienkonzeptes des Bewegungsvorgabemittels und aufgrund des Aufbaus auf teilweise bereits bekannte Bedienkonzepte bzw. Handhabungen seitens des mobilen Handterminals.

Von Vorteil sind auch die Maßnahmen nach Anspruch 4, da dadurch die entsprechende Datenverbindung technisch möglichst einfach bzw. energiesparend aufgebaut werden kann. Insbesondere wird eine relativ kurze Datenübertragungsstrecke erzielt bzw. ausgenutzt, welche den Einsatz von technologisch relativ einfachen und energiesparenden Datenübertragungsvorrichtungen ermöglicht. Dies gilt zum Einen für drahtgebundene Datenübertragungsstrecken, im Besonderen aber auch für drahtlos arbeitende Datenübertragungssysteme, insbesondere für Funkübertragungssysteme.

Durch die Maßnahmen gemäß Anspruch 5 wird eine relativ direkte bzw. unmittelbare Datenverbindung zwischen dem Bewegungsvorgabemittel und dem mobilen Handterminal geschaffen. Insbesondere werden dadurch Daten, welche für die Vorgabe von Bewegungen oder Abläufen relevant sind, ausgehend vom Bewegungsvorgabemittel direkt an das mobile Handterminal übertragen, welches sich in unmittelbarer Nähe zum Bewegungsvorgabemittel befindet. Bei dieser Ausführungsform ist es zweckmäßig, wenn die Sensorik zur Erfassung der Lage und/oder Orientierung des Bewegungsvorgabemittels in Bezug auf den dreidimensionalen Raum, direkt im Bewegungsvorgabemittel integriert ist. Bei Ausbildung einer externen Sensorik, welche beispielsweise auf einem Bilddatenerfassungsverfahren oder einem Triangulationsverfahren beruht, würde die externe Sensorik bzw. deren Auswerteeinrichtung eine Schnittstelle zum mobilen Handterminal aufweisen. Nichtsdestotrotz kann zusätzlich eine externe Sensorik vorgesehen sein, über welche steuerungstechnisch relevante Orientierungs- und/oder Lagedaten des aktiv und/oder passiv ausgeführten Bewegungsvorgabemittels an das mobile Handterminal übertragen werden.

Eine hinsichtlich Bedienungsergonomie und technischer Einfachheit günstige Maßnahme kann darin liegen, dass die Sensorik und die erste Datenschnittstelle im händisch zu führenden Bewegungsvorgabemittel angeordnet sind und die Datenverbindung über eine drahtlose Verbindung, insbesondere über eine Funkverbindung aufgebaut wird, indem die erste Datenschnittstelle und die damit korrespondierende, weitere Datenschnittstelle durch funktechnische Sende- und/oder Empfangsvorrichtungen zum Senden und/oder Empfangen elektromagnetischer Wellen gebildet werden. Insbesondere kann durch die drahtlose Kopplung zwischen dem händisch zu führenden Bewegungsvorgabemittel und dem mobilen Handterminal eine besonders komfortable bzw. ungehinderte Vorgabe von Bewegungsabläufen oder Positionsveränderungen eines Werkzeuges des Industrieroboters vorgenommen werden. Durch die unmittelbare Nähe zwischen dem Bewegungsvorgabemittel und dem mobilen Handterminal mit der Sicherheitsschalteinrichtung sind kurze Funkübertragungsdistanzen gewährleistet, welche den Aufbau einer zuverlässigen und energiesparenden Funkverbindung ermöglichen. Insbesondere kann dadurch das Bewegungsvorgabemittel als kabelfreies Funkmodul ausgeführt werden, welches trotz Integration von relativ kapazitätsschwachen bzw. leichtgewichtigen Energiequellen bzw. elektrochemischen Akkumulatoren einen relativ langfristigen Betrieb ermöglicht und eine komfortable, weil möglichst leichtgewichtige Handhabung bietet. Es entfallen auch Risiken und Probleme durch ein Verwickeln oder Einfädeln einer Kabelverbindung oder durch Defekte zufolge mechanischer Beschädigungen an einem Kabel oder an dessen Anschlussstellen.

Von Vorteil sind aber auch alternative Maßnahmen, nach welchen die Sensorik und die erste Datenschnittstelle im händisch zu führenden Bewegungsvorgabemittel angeordnet sind und die Datenverbindung draht- oder kabelgebunden aufgebaut wird, indem die erste Datenschnittstelle und die damit korrespondierende, weitere Datenschnittstelle durch elektrische Leitungsschnittstellen mit dazwischen aufgebauter Kabelverbindung gebildet werden. Nachdem das händisch zu führende Bewegungsvorgabemittel und das mobile Handterminal ohnehin in unmittelbarer Nähe zueinander angeordnet sind, weil beide Komponenten von einer Bedienperson getragen bzw. gehalten werden, ist auch eine Kabelverbindung zwischen den beiden baulich eigenständig ausgeführten Steuerungs- bzw. Bedienkomponenten problemlos einsetzbar. Insbesondere kann eine relativ kurze, hochflexible Kabelverbindung implementiert werden, ohne dass diese Kabelverbindung für die Bedienperson störend wirkt. Diese Kabelverbindung kann zur Erzielung einer gewissen Längenveränderbarkeit problemlos auch als Spiralkabel oder dergleichen ausgeführt sein. Ein wesentlicher Vorteil dieser Ausbildung liegt darin, dass im händisch zu führenden Bewegungsvorgabemittel keine Energiequellen, insbesondere keine Batterien oder keine elektrochemischen Akkumulatoren erforderlich sind, da die Energieversorgung in einfacher Art und Weise über die Kabelverbindung bewerkstelligt werden kann. Das händisch zu führende Bewegungsvorgabemittel kann somit besonders leichtgewichtig aufgebaut werden, was der Bedienungsergonomie zugute kommt. Darüber hinaus ist dieser Aufbau mittels Kabelverbindung besonders kostengünstig. Zudem kann eine besonders fehlersichere und technisch sehr einfache Datenübertragung via diese Leitungsverbindung aufgebaut werden. Darüber hinaus besteht kaum eine Gefahr, dass elektromagnetische Wellen von sonstigen Funksystemen oder starke Störfelder negativen Einfluss auf die Signal- bzw. Datenübertragung über die Leitungsverbindung zwischen dem händisch zu führenden Bewegungsvorgabemittel und dem mobilen Handterminal haben. Dies ist insbesondere im Anwendungsbereich der Robotik, in welchem häufig starke elektromagnetische Felder vorliegen, von Bedeutung, da dadurch kaum Fremd- bzw. Störbeeinflussungen am Übertragungsweg für sicherheitsrelevante Informationen bzw. Daten auftreten können. Darüber hinaus wird durch die Kabelverbindung eine stetige Verfügbarkeit des mobilen Bewegungsvorgabemittels erzielt, da im Gegensatz zu batterie- oder akkugespeisten Bewegungsvorgabemitteln nicht auf den Ladungszustand der Energiequellen des Bewegungsvorgabemittels und auch nicht auf die Leistungsfähigkeit bzw. Restkapazität von elektrochemischen Energiequellen geachtet werden muss, was insbesondere im Zuge eines Bedienprozesses als störend empfunden wird.

Durch die Maßnahmen gemäß Anspruch 6 bilden das mobile Handterminal und das händisch zu führende Bewegungsvorgabemittel eine funktional vollständige bzw. nach außen hin abgeschlossene Einheit. Insbesondere stellen dadurch das mobile Handterminal und das händisch zu führende Bewegungsvorgabemittel ein Funktionspaar dar, welches keinerlei externe Basis- bzw. Gegenstellen benötigt, um Positions- bzw. Orientierungsdaten für Bewegungsabläufe eines Industrieroboters vorgeben bzw. generieren zu können. Folglich wird der Installationsaufwand für ein Roboter-Steuerungssystem reduziert und können somit die Kosten desselben niedrig gehalten werden. Auch der Aufwand zum Aufbau bzw. zur Aktivierung des Systems wird minimiert, da beide Komponenten, welche in funktionsrelevanter Beziehung zueinander stehen bzw. zu setzen sind, von der entsprechenden Bedienperson direkt und unverzüglich zugreifbar sind. Auch Wartungsaufwände oder administrative Setup-Tätigkeiten an distanzierten Basis- oder Gegenstellen können somit erübrigt oder zumindest stark reduziert werden.

Durch Maßnahmen, gemäß welchen eine auf Adressen oder Kennungen basierende, eindeutige Zuordnung zwischen dem händisch zu führenden Bewegungsvorgabemittel und dem mobilen Handterminal aufgebaut wird, bevor die mittels dem händisch zu führenden Bewegungsvorgabemittel generierten Daten für die Vorgabe von Bewegungen oder Abläufen des Industrieroboters verwendet werden und/oder gemäß welchen die verwechslungsfreie und eindeutige Zuordnung durch eine datentechnische Sicherheitskennung mit erhöhter Fehlersicherheit und Funktionszuverlässigkeit aufgebaut wird, kann eine möglichst fehlerfreie bzw. absolut eindeutige Paarung zwischen einem mobilen Handterminal und einem händisch zu führenden Bewegungsvorgabemittel erzielt werden. Vor allem dann, wenn die Datenverbindung zwischen den genannten Komponenten drahtlos ausgeführt wird, ist eine sichere und verwechslungsfreie bzw. eindeutige Zuordnung zwischen einem Bewegungsvorgabemittel und einem mobilen Handterminal von besonderer Bedeutung in Bezug auf die Sicherheit bzw. Fehlerfreiheit in der Bedienung von potentiell gefahrbringenden Industrierobotern und ähnlichen technischen Einrichtungen. Erst nach Durchführung des besonders fehlersicheren bzw. eindeutigen Zuordnungsverfahrens wird diese Einheit als gültiges Funktionspaar anerkannt und können sodann die entsprechenden Bedienhandlungen eindeutig bzw. unmissverständlich vorgenommen werden. Insbesondere wird dadurch zuerst eine sichere bzw. eindeutige Paarung aus einem mobilen Handterminal und einem händisch zu führenden Bewegungsvorgabemittel vorgenommen und ist erst dann eine Veränderung von Abläufen bzw. eine Veränderung von Bewegungen oder Bewegungspositionen durchführbar. Die eindeutige Paarung kann dabei zum Einen bereits fix vorgegeben bzw. herstellerseitig vorgenommen werden oder aber auch durch eine spezielle Zuordnungsprozedur vom Benutzer vorgenommen oder geändert werden, wobei entsprechende geräteindividuelle Kennungen teilautomatisch oder manuell ausgetauscht bzw. eingestellt werden.

Von Vorteil sind auch die Maßnahmen gemäß Anspruch 7, da dadurch die Sicherheit des angegebenen Bedienkonzeptes weiter gesteigert werden kann. Insbesondere ist dadurch sichergestellt, dass nur jene Person eine Verfahrbewegung am Industrieroboter auslösen und beeinflussen kann, welche gleichzeitig auch eine Möglichkeit zur sicheren Stillsetzung des Industrieroboters mittels der Sicherheitsschalteinrichtung besitzt. Das heißt, dass durch diese Maßnahmen in einfacher und effektiver Art und Weise ausgeschlossen wird, dass eine erste Person bewusst oder unbewusst Zustimmung signalisiert und eine weitere Person mittels dem händisch geführten Bewegungsvorgabemittel potentiell gefahrbringende Verfahrbewegungen oder Veränderungen von sonstigen, prozesstechnischen Abläufen vornimmt bzw. auslöst. Eine Zuordnung der Sicherheitsschaltfunktion, insbesondere der Zustimmfunktion auf eine erste Person und die Zuordnung der Bewegungsvorgabefunktion auf eine weitere Person wird somit effektiv unterbunden. Insbesondere wird dadurch sichergestellt, dass nur jene Person potentiell sicherheitskritische Verfahrbewegungen oder Ablaufveränderungen vornehmen kann, welche jederzeit auch die Möglichkeit besitzt, mit der Sicherheitsschalteinrichtung, insbesondere mittels einem Zustimmtaster oder einer Not-Aus-Schaltvorrichtung, den Industrieroboter bzw. eine ähnliche technische Einrichtung still zu setzen bzw. in einen sicheren Betriebszustand zu überführen. Durch diese weiterbildenden Maßnahmen ist also gewährleistet, dass die bauliche Aufteilung zwischen Sicherheitsschalteinrichtung und Bewegungsvorgabemittel nicht auch zu einer Verteilung dieser Komponenten bzw. Funktionseinheiten auf unterschiedliche Personen führt. Insbesondere bei einer wiederholten Überprüfung während einer Verfahrbewegung ergibt sich eine weitere Verbesserung der Sicherheit dadurch, dass durch ein plötzliches und unbeabsichtigtes Entgleiten des Bewegungsvorgabemittels aus der Hand des Benutzers etwaige unkontrollierte Roboterbewegungen zuverlässig unterbunden werden.

Von Vorteil sind auch die Maßnahmen gemäß Anspruch 8. Dadurch wird in einfacher jedoch zuverlässiger und effektiver Art und Weise überprüft, ob jene Person, welche das Bewegungsvorgabemittel hält bzw. führt, auch Zugriff auf die Sicherheitsschalteinrichtung am mobilen Handterminal hat. Insbesondere wird dadurch automatisiert überprüft, ob jene Person, welche potentiell sicherheitskritische Bedienhandlungen mittels dem Bewegungsvorgabemittel ausführt oder vorgibt, gleichzeitig auch eine unverzügliche und sichere Stillsetzung des Industrieroboters bzw. einer vergleichbaren technischen Einrichtung vornehmen kann. Der Körper der Bedienperson wird dabei als Kennzeichen oder als signaltechnisches Kopplungsmittel bzw. als Indiz für die unmittelbare, räumliche Nähe zwischen dem händisch zu führenden Bewegungsvorgabemittel und dem mobilem Handterminal eingesetzt. Der gemeinsame Körperkontakt von Handterminal und Bewegungsvorgabemittel zu einer Person stellt dabei ein Gewährleistungskriterium für die ungeteilte Befehlsgewalt dieser Person über die Bedien- bzw. Befehlselemente und über die Sicherheitsfunktionen zur Überführung der technischen Einrichtung in einen sicheren Zustand dar.

Eine effektvolle Ausführungsform zur Überprüfung der unmittelbaren Nähe zwischen dem händisch geführten Bewegungsvorgabemittel und dem mobilen Handterminal und somit der Möglichkeit einer spontanen Zugreifbarkeit auf die Sicherheitsschalteinrichtung am mobilen Handterminal wird durch die Maßnahmen gemäß Anspruch 9 geschaffen. Auch diese technische Ausführungsvariante ist zuverlässig und in technisch relativ einfacher Art und Weise umsetzbar.

Entsprechend Maßnahmen, durch die zwischen dem händisch zu führenden Bewegungsvorgabemittel und dem mobilen Handterminal eine drahtlose Datenverbindung, insbesondere eine Funkverbindung, aufgebaut wird und anhand der Signalstärke oder der Übertragungsqualität erkannt oder überprüft wird, ob das händisch zu führende Bewegungsvorgabemittel und das mobile Handterminal von derselben Bedienperson gehalten werden, kann in vorteilhafter Art und Weise der Umstand zunutze gemacht werden, dass der Körper einer Bedienperson durch die unmittelbare Nähe zu den Antennen im Bewegungsvorgabemittel und im Handterminal physikalischen Einfluss auf das Übertragungsverhalten der Funkstrecke bzw. Funkverbindung hat. Insbesondere wird durch den Einfluss der Bedienperson auf die Funkstrecke bzw. auf die Funksignale, welche zwischen dem mobilen Handterminal und dem händisch zu führenden Bewegungsvorgabemittel übertragen werden, darauf Rückschluss gezogen, ob die genannten Komponenten tatsächlich von ein und derselben Person gehalten oder getragen werden bzw. in unmittelbarer Nähe zueinander sind, sodass im Bedarfsfall eine unverzügliche, sichere Stillsetzung oder ein unmittelbarer Abbruch der Bewegungsabläufe des Industrieroboters ermöglicht ist. Besonders vorteilhaft ist dabei, dass diese Überprüfung ohne aufwändige zusätzliche technische Einrichtungen realisierbar ist und in der Regel softwaretechnische Mittel zur Umsetzung dieser Überprüfung ausreichend sind, da handelsübliche Funkmodule die benötigten Informationen oftmals über entsprechende Schnittstellen bereitstellen.

Weitere vorteilhafte Maßnahmen zur Überprüfung, ob das mobile Handterminal und das händisch zu führende Bewegungsvorgabemittel von einer einzigen Bedienperson getragen bzw. gehalten werden, können dadurch definiert sein, dass eine kapazitive Nahfeldkopplung zwischen dem Körper einer Bedienperson und (a) Antennen zum Aufbau einer drahtlosen Datenverbindung zwischen dem händisch zu führenden Bewegungsvorgabemittel und dem mobilen Handterminal, oder (b) von spezifisch vorgesehenen Antennen oder Elektrodenanordnungen für die Erzeugung elektrischer Felder, zur Erkennung und Überprüfung des Vorliegens (i) einer unmittelbaren Nähe einer Bedienperson oder (ii) des Haltens des mobilen Handterminals und des händisch zu führenden Bewegungsvorgabemittels durch eine Bedienperson eingesetzt wird. Die angegebenen Maßnahmen ermöglichen eine möglichst kostengünstige und zugleich überaus zuverlässige Überprüfung der "Einpersonen-Handhabung". Damit wird die Sicherheit des Bedienkonzeptes umfassend ein baulich eigenständiges Bewegungsvorgabemittel und ein damit kooperierendes mobiles Handterminal gesteigert bzw. besonders hoch angesetzt. Dies nicht zuletzt auch deswegen, weil eine technisch zuverlässige, insbesondere mehrkreisig ausgeführte Sicherheitsschalteinrichtung besonders anwendungs- bzw. bediensicher am mobilen Handterminal ausgeführt ist.

Durch Maßnahmen, gemäß denen das Vorliegen einer kapazitiven Nahfeldkopplung zwischen dem händisch zu führenden Bewegungsvorgabemittel und dem Körper einer Bedienperson durch eine Elektrodenanordnung am händisch zu führenden Bewegungsvorgabemittel detektiert oder überprüft wird und eine Veränderung des elektrischen Feldes der Elektrodenanordnung, insbesondere eine Veränderung der kapazitiven Eigenschaften der Elektrodenanordnung, infolge einer unmittelbaren Nähe oder einer Abwesenheit des Körpers eines Benutzers, zur Erkennung oder Überprüfung der An- und Abwesenheit einer Bedienperson eingesetzt wird, kann eine unmittelbare Nähe einer Person detektiert werden, ohne dass ein direkter Kontakt, insbesondere ein Hautkontakt zwischen dem Bewegungsvorgabemittel und der jeweiligen Person erforderlich ist. Somit ist es nicht erforderlich, bestimmte Kontaktstellen am Bewegungsvorgabemittel ständig zu berühren oder exakt zu betätigen, um eine steuerungstechnisch verwertbare Information über die Anwesenheit oder unmittelbare Nähe einer Person zu erhalten. Darüber hinaus kann damit der Energieverbrauch des Bewegungsvorgabemittels reduziert werden, da das Bewegungsvorgabemittel in jenen Phasen, in welchen eine Bedienperson nicht anwesend ist, gegebenenfalls in einen stromsparenden Betrieb, beispielsweise in einen Standby-Betrieb, überführt werden kann. Bei unmittelbarer Annäherung oder Kontaktierung des Bewegungsvorgabemittels von einer Person kann dieses sodann automatisch aktiviert werden und zur Bereitstellung der zugedachten Funktionalität automatisch aktiviert werden. Zum Einen kann dadurch der Standby-Energieverbrauch drastisch reduziert werden und ist überdies die Integration leichterer bzw. kapazitätsschwächerer Energiequellen möglich, wodurch der Bedienungskomfort gesteigert wird, ohne dass Einbußen an Leistungsfähigkeit in Kauf genommen werden müssten.

Durch die vorteilhaften Maßnahmen gemäß Anspruch 10 wird sichergestellt, dass für die Vorgabe von Bewegungen oder Abläufen mit potentiellem Sicherheitsrisiko ausschließlich eine einzige Bedienperson die Zustimmung zur Ausführung dieser Vorgänge erteilt und von dieser Bedienperson zugleich ein sicheres Stillsetzen der Bewegungsabläufe oder ein Abbrechen der potentiell kritischen Abläufe vorgenommen werden kann.

Eine weitere Maßnahme zur zuverlässigen Überprüfung einer "Einpersonen-Handhabung" kann darin liegen, dass an einem Gehäuse des händisch zu führenden Bewegungsvorgabemittels und an einem Gehäuse des mobilen Handterminals jeweils zumindest ein galvanischer Koppelpunkt, insbesondere eine elektrische Kontaktfläche, ausgebildet ist und der Körper einer Bedienperson zum Aufbau einer elektrisch leitenden Verbindung zwischen diesen Koppelpunkten vorgesehen ist, wodurch erkannt oder überprüft wird, ob das mobile Handterminal und das händisch zu führende Bewegungsvorgabemittel von derselben Person gehalten wird. Insbesondere wird dadurch die elektrische Leitfähigkeit eines Benutzers, insbesondere seiner Haut, ausgenutzt, um überprüfen bzw. erkennen zu können, ob das händisch zu führende Bewegungsvorgabemittel von jener Person bedient wird, welche auch das mobile Handterminal hält und somit unverzüglich reagieren kann, sobald eine potentiell gefahrbringende Situation eintritt.

Von Vorteil sind auch weiterbildende Maßnahmen, gemäß denen über einen Körperkontakt eines Benutzers gegenüber dem mobilen Handterminal und gegenüber dem händisch zu führenden Bewegungsvorgabemittel auch die Daten für die Bewegungssteuerung oder Ablaufprogrammierung des Industrieroboters ausgehend vom händisch zu führenden Bewegungsvorgabemittel über den Körper des Benutzers zum mobilen Handterminal übertragen werden, da dadurch zum Einen sichergestellt ist, dass ein- und dieselbe Person die Bedienhandlungen am bzw. mit dem Bewegungsvorgabemittel sowie am bzw. mit dem mobilen Handterminal vornimmt. Außerdem wird dabei die Datenverbindung über den Körper der Bedienperson aufgebaut, sodass bei Aufhebung des Körperkontaktes automatisch bzw. nach einer gewissen Zeitverzögerung die Generierung von Steuerdaten für den Industrieroboter zwangsweise beendet wird bzw. nach einer gewissen Zeitspanne automatisch beendet wird. Von Vorteil ist insbesondere, dass durch diese Maßnahme eine zusätzliche Übertragungsstrecke für die Daten erübrigt ist, und dass weiters auch eine eindeutige datentechnische Zuordnung zwischen Handterminal und Bewegungsvorgabemittel erübrigt ist, da diese sich unmittelbar aus dem gleichzeitigen Halten beider Geräte durch die selbe Person ergibt.
Ferner sind die Maßnahmen nach Anspruch 11 und/oder 12 vorteilhaft, da dadurch eine automatische Aktivierung und Deaktivierung zumindest des händisch zu führenden Bewegungsvorgabemittels umgesetzt ist, um ein verbessertes Energie-Management zumindest in Bezug auf die Energieversorgung des händisch zu führenden Bewegungsvorgabemittels zu erzielen. Insbesondere kann dadurch automatisiert zwischen einem Standby- bzw. Sleep-Modus und einem Aktiv-Modus umgeschaltet werden, um den Energieverbrauch bzw. die Einsatzdauer eines batteriegespeisten, händisch zu führenden Bewegungsvorgabemittels zu optimieren.

Von Vorteil sind auch Maßnahmen, gemäß welchen das händisch zu führende Bewegungsvorgabemittel an einer Ablagevorrichtung am mobilen Handterminal abgelegt oder befestigt wird, wenn eine Hand für Bedienhandlungen am mobilen Handterminal benötigt wird, da dadurch die Bedienperson das händisch zu führende Bewegungsvorgabemittel bei Bedarf rasch und bequem am mobilen Handbediengerät ablegen bzw. diesem zuordnen kann. Dadurch hat die Bedienperson sofort eine Hand frei, um diverse Tätigkeiten vornehmen zu können, insbesondere um Bedienhandlungen am mobilen Handterminal ausführen zu können.

Darüber hinaus wird dadurch ein Weglegen bzw. Verlieren des händisch zu führenden Bewegungsvorgabemittels hintan gehalten. Zudem wird dadurch die Wahrscheinlichkeit eines Verlustes bzw. einer Beschädigung und die Gefahr der Verursachung von unkontrollierten Zuständen des Industrieroboters minimiert.

Durch die Maßnahmen gemäß Anspruch 13 werden zum Einen die vorhergehend geschilderten Effekte erzielt. Darüber hinaus wird vor allem dann, wenn das händisch zu führende Bewegungsvorgabemittel als kabellos fungierendes Eingabemittel ausgeführt ist, darüber hinaus erzielt, dass dieses möglichst durchgängig betriebsbereit ist, indem es während der Zuordnung zur Ablagevorrichtung auch aufgeladen wird. Damit einhergehend ist eine hohe Verfügbarkeit des angegebenen Systems auch dann gegeben, wenn zwischen dem händisch zu führenden Bewegungsvorgabemittel und dem mobilen Handterminal eine drahtlose Verbindung aufgebaut ist und das Bewegungsvorgabemittel folglich mit separaten Energiequellen, insbesondere mit elektrochemischen Akkumulatoren, gespeist wird.

Von Vorteil sind auch die Maßnahmen gemäß Anspruch 14, da dadurch das mobile Handterminal bei abgelegtem Bewegungsvorgabemittel, insbesondere bei unmittelbarer Zuordnung des Bewegungsvorgabemittels zum mobilen Handterminal, quasi selbst zum orientierungsabhängigen Bewegungsvorgabemittel wird. Wird dann zum Beispiel ein Joystick am mobilen Handterminal in eine der mit dem Joystick möglichen Richtungen ausgelenkt, so verfährt der Industrieroboter genau in die gleiche Richtung, wie dies durch die Auslenkrichtung des Joysticks vorgegeben wurde. Missverständliche, insbesondere gegensinnige bzw. entgegen gesetzte Bewegungsvorgaben durch für den Benutzer nicht intuitiv einsichtige Koordinatentransformationen zwischen dem lokalen Koordinatensystem des Handterminals bzw. des Benutzers und des Koordinatensystems des Roboters können somit vermieden werden.

Ein weiterer Vorteil liegt darin, dass am mobilen Handterminal ergonomisch gut bedienbare und konstruktiv ausgeklügelte bzw. qualitativ hochwertige, mehrachsige Eingabemittel in Form von Joysticks oder Jog-Eingabeelementen, wie zum Beispiel Jog-Rädern, ausgebildet werden können, welche am händisch zu führenden Bewegungsvorgabemittel aus Platzgründen kaum implementiert bzw. nur erschwert untergebracht werden können. Durch diese Maßnahmen werden also die Wirkungsrichtungen der Eingabeelemente, wie zum Beispiel von Joysticks oder Jog-Rädern, am mobilen Handterminal an die durch das Bewegungsvorgabemittel angezeigte Richtung angepasst. Der Industrieroboter verfährt sodann in unmissverständlicher Art und Weise in genau jene Richtung, in welche auch das Eingabemittel bewegt bzw. gedreht wurde. Vom Blickwinkel abhängige bzw. sich durch einen Standortwechsel des Benutzers jeweils verändernde Betätigungen eines Eingabemittels am Handterminal sind somit obsolet.

Durch die Maßnahmen gemäß Anspruch 15 werden Missverständnisse im Umgang mit dem händisch zu führenden Bewegungsvorgabemittel und dem mobilen Handterminal weitestgehend vermieden. Insbesondere ist für einen Benutzer klar ersichtlich, ob die genannten Komponenten datentechnisch kombiniert bzw. zu einem Funktionspaar zusammengeschaltet sind. Irrtümer bzw. missverständliche Aktionen können somit in hohem Ausmaß vermieden werden.

Die Aufgabe der Erfindung wird auch durch ein Steuerungssystem gemäß Anspruch 16 bzw. 19 und durch ein händisch zu führendes Bewegungsvorgabemittel gemäß Anspruch 18 gelöst. Vorteilhafte Weiterbildungen sind in Anspruch 17 angegeben. Die jeweils erzielbaren, technischen Effekte und Vorteile sind der vorangehenden Beschreibung sowie den nachfolgenden Beschreibungsteilen zu entnehmen.

Insbesondere sind die durch das angegebene, erfindungsgemäße Verfahren erzielbaren technischen Effekte und Vorteile analog auf die beanspruchten Vorrichtungen zu übertragen, wobei diese Übertragung im Rahmen des fachmännischen Könnens liegt, welches zumindest teilweise im Zusammenhang mit den Lehren aus der gegenständlichen Offenbarung aufgebaut wird.

Zum besseren Verständnis der Erfindung wird diese anhand der nachfolgenden Figuren näher erläutert.

Es zeigen jeweils in stark vereinfachter, schematischer Darstellung:
- Fig. 1: ein Ausführungsbeispiel eines Steuerungssystems für einen Industrieroboter, in welchem ein händisch zu führendes Bewegungsvorgabemittel und ein mobiles Handterminal in Kombination eingesetzt werden;

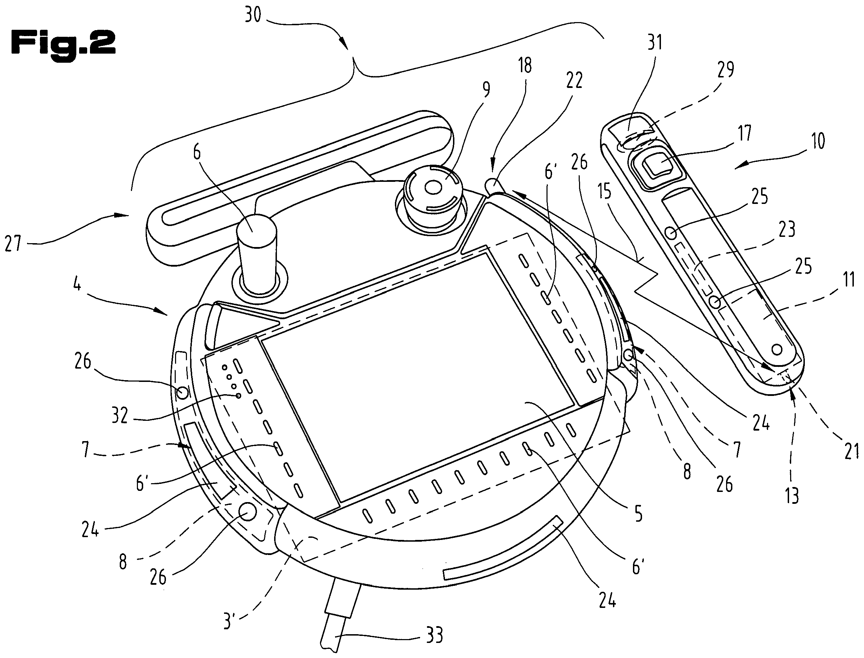

- Fig. 2: ein Ausführungsbeispiel eines aus einem mobilen Handterminal und einen händisch zu führenden Bewegungsvorgabemittel gebildeten Funktionspaares zum Programmieren oder Vorgeben von Bewegungen oder Abläufen eines Industrieroboters.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

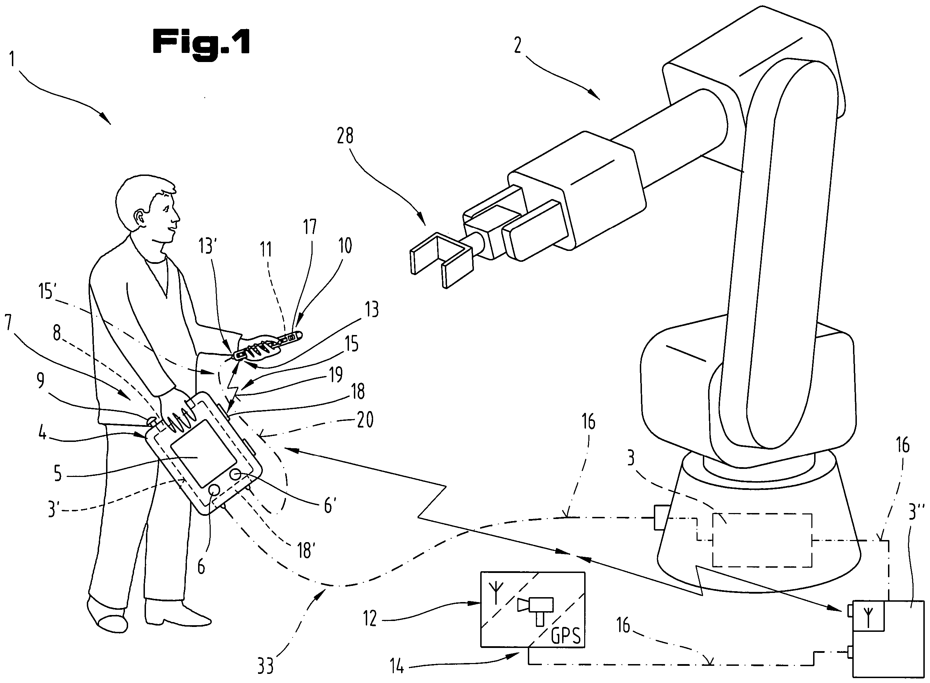

In Fig. 1 ist ein Steuerungssystem 1 schematisch und beispielhaft veranschaulicht, mit welchem eine Programmierung oder Vorgabe von Bewegungen oder Abläufen eines Industrieroboters 2 ermöglicht wird. Dieser Industrieroboter 2 kann durch eine aus dem Stand der Technik bekannte, mehrachsige Manipulatoreinheit oder durch ein sonstiges Handling-Aggregat gebildet sein, mit welchem technische Prozesse, beispielsweise Schweiß- oder Lackierprozesse oder Handlingprozesse für Werkstücke, automatisiert oder teilautomatisiert ausgeführt werden können.

Dem zumindest einen Industrieroboter 2 innerhalb des Steuerungssystems 1 ist zumindest eine integrierte und/oder externe Steuervorrichtung 3, 3', 3" zugeordnet. Das Steuerungssystem 1 kann durch beliebige aus dem Stand der Technik bekannte, elektrotechnische Steuervorrichtungen 3, 3', 3" gebildet werden, wobei je nach technologischem Bedarf zentrale und/oder dezentrale Steuerungsarchitekturen eingesetzt sein können. Insbesondere kann durch ein Zusammenwirken mehrerer integrierter und/oder externer Steuervorrichtungen 3, 3', 3" ein verteiltes Steuerungssystem 1 aufgebaut werden, um die jeweiligen Steuerungsabläufe für einen mehrachsigen Industrieroboter 2 bewerkstelligen zu können.

Vorzugsweise ist im Steuerungssystem 1 wenigstens eine mobile, insbesondere ein tragbare, Steuervorrichtung 3' implementiert bzw. implementierbar. Diese mobile bzw. tragbare Steuervorrichtung 3' kann zumindest einen Teil der Steuerungsaufgaben im Steuerungssystem 1 übernehmen bzw. kann die tragbare Steuervorrichtung 3' bei Bedarf in das Steuerungssystem 1 eingebunden werden, um Steuerungsabläufe des Industrieroboters 2 beeinflussen und/oder beobachten zu können. Eine solche mobile Steuervorrichtung 3' ist üblicherweise in einem mobilen, insbesondere tragbaren Handterminal 4 angeordnet, wie es aus dem Stand der Technik in zahlreichen Ausführungen bekannt ist. Das Steuerungssystem 1 umfasst also zumindest ein permanent eingebundenes und/oder zumindest ein bedarfsweise einbindbares sowie bei Bedarf aus dem Steuerungssystem 1 entkoppelbares, mobiles Handterminal 4.

Dieses mobile Handterminal 4 umfasst eine Mehrzahl von Ein- und Ausgabeelementen, um damit Steuerungsabläufe im Steuerungssystem 1 beobachten und/oder verändern zu können. Diese Ein- und Ausgabeelemente sind in an sich bekannter Weise durch wenigstens ein Display 5, bevorzugt in Art eines Touchscreen, und durch wenigstens ein Bedienelement 6, 6' gebildet. Das wenigstens eine Bedienelement 6, 6' kann dabei durch ein mehrachsiges Bedienelement, insbesondere durch einen Joystick, ein Jog-Rad und/oder durch herkömmliche Schalter und Tastelemente gebildet sein, um Steuerungsabläufe beeinflussen, insbesondere Steuerungsparameter verändern zu können.

Wenigstens ein Bedienelement 6, 6' am mobilen Handterminal 4 ist auch zur softwarebasierten, menügeführten Interaktion mit der Bedienperson vorgesehen, nachdem das mobile Handterminal 4 quasi als Mensch-Maschine-Schnittstelle (HMI) gegenüber dem Industrieroboter 2 fungiert.

Das mobile Handterminal 4 umfasst in an sich bekannter Weise wenigstens eine Sicherheitsschalteinrichtung 7 zum bedienerseitigen Beeinflussen bzw. Kontrollieren von potentiell sicherheitskritischen Bewegungen oder Abläufen des Industrieroboters 2. Unter potentiell sicherheitskritischen Bewegungen oder Abläufen sind dabei vor allem Verfahrbewegungen, Zustandsveränderungen oder Prozessaktivierungen zu verstehen, welche eine potentielle Gefährdung für Personen, Einrichtungen oder Gegenstände darstellen könnten. Insbesondere soll mittels der Sicherheitsschalteinrichtung 7 das Gefahrenpotential im Hinblick auf eine Gefährdung von Personen und/oder im Hinblick auf Sachschäden minimiert werden, wobei dieses Gefahrenpotential auch auf den Industrieroboter 2 per se und auf umliegende technische Einrichtungen sowie auf die zu bearbeitenden Prozesse oder Werkstücke zu beziehen ist. Unter dem Begriff Industrieroboter 2 sind dabei auch vergleichbare technische Maschinen oder Maschinenanlagen mit einem bestimmten Automatisierungspotential zu verstehen.

Die Sicherheitsschalteinrichtung 7 am mobilen Handterminal 4 umfasst wenigstens einen sogenannten Zustimmtaster 8. Gegebenenfalls sind mehrere Zustimmtaster 8 am Handterminal 4 vorgesehen, welche vor allem je nach Griff- bzw. Halteposition des Handterminals 4 von der Bedienperson wahlweise betätigt werden können, um seitens der Bedienperson dem Steuerungssystem 1 bzw. dem Industrieroboter 2 eine benutzerseitige Zustimmung zur Ausführung von potentiell sicherheitskritischen Bewegungen oder Abläufen zu signalisieren. Der wenigstens eine Zustimmtaster 8 signalisiert somit bei entsprechender Betätigung durch die Bedienperson eine Absicht bzw. ein Bewusstsein der Bedienperson in Zusammenhang mit der Ausführung einer potentiell gefährdenden bzw. aus Sicherheitsgründen offiziell abzusichernden Verfahrbewegung oder Prozessveränderung des Industrieroboters 2.

Ein solcher Zustimmtaster 8 ist vorzugsweise in sicherer Technik, insbesondere zumindest zweikreisig ausgeführt, wobei vorzugsweise auch eine zweikreisige Erfassung bzw. Auswertung der Betätigungszustände des wenigstens einen Zustimmtasters 8 erfolgt. Ein derartiger Zustimmtaster 8 und dessen Auswertungs- bzw. Erfassungsvorrichtung ist somit in möglichst fehlersicherer und zuverlässiger Technik ausgeführt. Der wenigstens eine Zustimmtaster 8 und dessen möglichst funktions- bzw. fehlersichere Auswertungstechnik ist im Handterminal 4 implementiert. Gegebenenfalls können auch Teile des Steuerungssystems 1 mit erhöhter Fehlersicherheit ausgeführt sein, wobei externe Komponenten des Steuerungssystems 1 möglichst zuverlässig bzw. fehlersicher auch Auswertungs- bzw. Erfassungsaufgaben in Bezug auf den bedienerseitig zu betätigenden Zustimmtaster 8 übernehmen können. Selbstverständlich ist es auch möglich, innerhalb des Steuerungssystems 1 mehrere, an verschiedenen Orten verteilt angeordnete Zustimmtaster 8 vorzusehen.

Die Sicherheitsschalteinrichtung 7 am mobilen Handterminal 4 kann weiters eine Not-Aus-Schaltvorrichtung 9 umfassen, welche bei Betätigung, beispielsweise im Falle kritischer Prozesszustände oder Verfahrbewegungen, eine sofortige Stillsetzung oder eine unmittelbare Überführung des Industrieroboters 2 oder einer vergleichbaren technischen Einrichtung - oder auch eines Teiles davon - in einen sicheren Betriebszustand bewirkt. Ein sichererer Betriebszustand kann dabei durch eine sofortige Abschaltung der Energiezufuhr oder durch eine unmittelbare Überführung in einen bestimmten Betriebs- oder Bewegungszustand definiert sein. Auch derartige Not-Aus-Schaltvorrichtungen 9 können innerhalb des Steuerungssystems 1 verteilt angeordnet sein.

Während diese Not-Aus-Schaltvorrichtung 9 bei Aktivierung durch eine Bedienperson eine sofortige Beendigung der Bewegung bzw. eine Abschaltung des Industrieroboters 2 bzw. Maschinenteils innerhalb des entsprechenden Sicherheitskreises bewirkt, wird mittels dem Zustimmtaster 8 seitens der Bedienperson eine Zustimmung zur Ausführung potentiell gefährdenden Bewegungen oder Abläufen gewissermaßen aktiv bzw. bewusst angezeigt. Das heißt, dass nur bei bewusster und aktiver Betätigung des Zustimmtasters 8 eine Ausführung von potentiell gefahrbringenden Bewegungen oder Abläufen ermöglich ist. Sobald der Zustimmtaster 8 von der Bedienperson losgelassen wird bzw. sobald ein mehrstufiger Zustimmtaster 8 in eine gesonderte Panikstellung überführt wird, wird die vorgesehene Verfahrbewegung oder Ablaufveränderung unmittelbar gestoppt bzw. abgebrochen. Außerdem wird eine potentiell kritische Verfahrbewegung oder Ablaufveränderung erst gar nicht ausgeführt, sofern der Zustimmtaster 8 nicht in vordefinierter Weise betätigt wird. Ein solcher Zustimmtaster 8 kann beispielsweise auch durch elastisch nachgiebige, insbesondere verstellbare Teilabschnitte an der Gehäuseoberfläche des Handterminals 4 gebildet sein.

Die Sicherheitsschalteinrichtung 7 im bzw. am mobilen Handterminal 4 umfasst somit zumindest einen Zustimmtaster 8 und gegebenenfalls eine Not-Aus-Schaltvorrichtung 9, wie dies in Fig. 1 schematisch veranschaulicht wurde. Die Sicherheitstechnik zur fehlersicheren und möglichst zuverlässigen Auswertung der entsprechenden Betätigungszustände ist zumindest teilweise im mobilen Handterminal 4 implementiert. Hierfür ist eine möglichst fehlersichere, insbesondere mehrkreisige Auswertung im Handterminal 4 angeordnet. Bevorzugt ist auch eine sicherheitstechnisch überprüfte Auswertungssoftware für die Sicherheitsschalteinrichtung 7 bzw. für den zumindest einen Zustimmtaster 8 im Handterminal 4 bzw. im Steuerungssystem 1 implementiert.

Mit dem mobilen Handterminal 4 ist dabei eine umfassende Veränderung und/oder Beobachtung von Betriebszuständen oder Abläufen des Industrieroboters 2 ermöglicht. Hierzu wird das Display 5 und wenigstens ein Bedienelement 6, 6' des Handterminals 4 von einer entsprechend befugten Bedienperson eingesetzt. Das mobile, insbesondere tragbare Handterminal 4 wird dabei zweckmäßigerweise von einer Hand der Bedienperson derart gehalten, dass dessen Display bzw. dessen Bedienelemente 6, 6' einsehbar sind. Bei bestimmten Handlungen oder Situationen ist es jedoch auch möglich, das Handterminal 4 am Körper der Bedienperson zu tragen, insbesondere einzustecken oder mittels einer Haltespange am Körper bzw. an der Kleidung der Bedienperson zu befestigen, sodass ein manuelles Halten des Handterminals 4 erübrigt ist. Hierfür können auch Halteschlaufen oder Traggurte eingesetzt werden, welche um den Rumpfbereich oder um den Hals der Bedienperson geführt sind.

Vorzugsweise ist das Gehäuse des Handterminals 4 derart geformt bzw. ausgebildet, dass es Gehäuseabschnitte oder Griffelemente aufweist, die es ermöglichen, das Handterminal 4 bequem mit nur einer Hand zu halten und gleichzeitig mit der gleichen Hand bzw. mit den Fingern dieser Hand wenigstens einen Zustimmtaster 8 für eine bedarfsweise Signalisierung einer Zustimmung zu einer Verfahrbewegung oder Ablaufveränderung betätigen zu können. Die entsprechenden Gehäuseabschnitte oder Griffelemente sind dabei derart ausgeführt, dass bei nach unten hängender Hand der Bedienperson ein sicheres Halten und ein bedarfsweises Betätigen der Sicherheitsschalteinrichtung 7 ermöglicht ist. Ein ständiger Blick auf die Ein- und Ausgabeelemente, insbesondere auf das Display 5 und auf die Bedienelemente 6, 6' ist vor allem in Verbindung mit dem erfindungsgemäßen Bedienkonzept nicht zwingend erforderlich.

Zweckmäßig ist es also, wenn die Sicherheitsschalteinrichtung 7, insbesondere wenigstens ein Zustimmtaster 8, welchem erhöhte Funktions- bzw. Fehlersicherheit zugrunde liegt, am mobilen Handterminal 4 derart positioniert ist, dass mit nur einer Hand der Bedienperson ein komfortables Halten des mobilen Handterminals 4 ermöglicht ist und mit der selben Hand oder mit zumindest einem Finger dieser Hand eine bedarfsweise Betätigung der Sicherheitsschalteinrichtung 7, insbesondere von wenigstens einem Zustimmtaster 8 erfolgen kann.

Entsprechend dem erfindungsgemäßen Vorgehen in Zusammenhang mit der Programmierung oder Vorgabe von Bewegungen oder Abläufen eines Industrieroboters 2 ist zusätzlich zu diesem mobilen Handterminal 4 ein händisch zu führendes Bewegungsvorgabemittel 10 vorgesehen. Das mobile Handterminal 4 mit hoher Funktionsdichte bzw. Funktionsvielfalt stellt dabei ein primäres bzw. relativ hochentwickeltes Bedien- und Beobachtungsgerät für die jeweiligen Steuerungsabläufe im Steuerungssystem 1 dar. Demgegenüber kann das mit dem Handterminal 4 zu einer Funktionseinheit kombinierbare Bewegungsvorgabemittel 10 als Zusatzmodul bzw. als Erweiterungskomponente bezeichnet werden, welches jedoch die Vorgabe oder Programmierung von Bewegungsabläufen eines Industrieroboters 2 wesentlich erleichtert. Das Bewegungsvorgabemittel 10 kann somit auch als sekundäres bzw. optionales und bedarfsweise ergänzbares Zusatzmodul vorgesehen sein.

Mit dem von der Bedienperson händisch zu führenden Bewegungsvorgabemittel 10 wird zumindest ein Teil der Daten für die Bewegungsteuerung oder Ablaufprogrammierung des Industrieroboters 2 generiert. Hierzu gibt die Bedienperson mittels dem Bewegungsvorgabemittel 10 quasi eine Sollbewegung und/oder eine Sollposition bzw. Sollorientierung vor, welche vom Steuerungssystem 1 derart umgesetzt wird, dass der zu steuernde bzw. zu bedienende Industrieroboter 2 vorgabegemäße Bewegungen oder Sollpositionen einnimmt bzw. vorgabegemäße Veränderungen im jeweiligen, technischen Ablauf bzw. Prozessablauf umgesetzt werden. Das händisch zu führende Bewegungsvorgabemittel 10 weist eine integrierte Sensorik 11 auf bzw. ist dem händisch zu führenden Bewegungsvorgabemittel 10 eine externe Sensorik 12 zugeordnet, über welche die Orientierung und/oder die Position des händisch geführten Bewegungsvorgabemittels 10 im Raum ermittelt bzw. ausgewertet wird. Die Informationen bzw. Daten der integrierten und/oder externen Sensorik 11, 12 stellen sodann zumindest einen Teil jener Daten dar, welche für die Bewegungssteuerung oder Ablaufprogrammierung des Industrieroboters 2 verwendet bzw. benötigt werden.

Das Bewegungsvorgabemittel 10 kann entsprechend einer möglichen Ausführungsform ausschließlich eine integrierte Sensorik 11 umfassen und somit quasi als aktives Bewegungsvorgabemittel 10 fungieren. Alternativ dazu kann das Bewegungsvorgabemittel 10 auch passiv ausgeführt sein, wobei über eine externe Sensorik 12 die entsprechenden Orientierungs- und/oder Positionsdaten ermittelt werden bzw. deren zeitliche Veränderung aufgezeichnet wird. Selbstverständlich ist auch eine Kombination aus integrierter und externer Sensorik 11, 12 möglich, um beispielsweise eine besonders zuverlässige bzw. hochgenaue Ermittlung von Orientierungs- bzw. Positionsdaten des Bewegungsvorgabemittels 10 in Bezug auf den dreidimensionalen Raum zu erzielen. Unter dem Begriff Sensorik 11, 12 ist neben den eigentlichen sensorischen Erfassungsmitteln auch ein entsprechendes Auswertungsmittel, insbesondere eine elektronische Aufbereitungs- und Auswertungsvorrichtung zu verstehen, welche die sensorisch erfassten Signale bzw. Informationen in von den Steuerungskomponenten des Steuerungssystems 1 verwertbare bzw. weiterverarbeitbare Daten bzw. Schnittstellenprotokolle transferiert.

Die jeweilige Sensorik 11, 12 kann dabei durch beliebige aus dem Stand der Technik bekannte Erfassungs- und Auswertemittel gebildet sein, um die Orientierung und/oder die Position von Objekten im Raum daten- bzw. steuerungstechnisch ermitteln bzw. bestimmen zu können. Insbesondere können hierfür sogenannte Inertial-Sensoriken vorgesehen sein, welche vorzugsweise die im Bewegungsvorgabemittel 10 integrierte Sensorik 11 definieren. Mittels diesen Inertial-Sensoren, welche aus Intertial-Gebern und Beschleunigungsaufnehmern bestehen, kann eine rechnergestützte Ermittlung von Orientierungs- bzw. Positionsdaten und deren Veränderung vorgenommen werden. Die Sensorik 11, 12 kann aber auch durch aus dem Stand der Technik bekannte Triangulationsverfahren für übertragene Signale mit bestimmter Laufzeit, durch optische Bilddatenerfassungen unter Zuhilfenahme von Videokameras, oder durch sonstige Positionserfassungssysteme, wie zum Beispiel GPS oder durch lokale Positionserfassungssysteme gebildet sein. Wesentlich ist, dass die jeweils ausgebildete Sensorik 11 bzw. 12 eine ausreichend genaue und zuverlässige Ermittlung der Orientierung und/oder Position des händisch zu führenden Bewegungsvorgabemittels 10 ermöglicht.

Wesentlich ist, dass die im händisch zu führenden Bewegungsvorgabemittel 10 integrierte Sensorik 11 und/oder die externe Sensorik 12 zumindest eine Datenschnittstelle 13, 14 aufweist, über welche zumindest Daten für die Bewegungssteuerung oder Ablaufprogrammierung über zumindest eine dazugehörige Datenverbindung 15, 16 direkt oder indirekt an ein mobiles Handterminal 4 übermittelt werden, welches zur Veränderung oder Beobachtung von Zuständen des Industrieroboters 2, wie dies in Fig. 1 schematisch veranschaulicht wurde, ausgebildet ist. Die Datenverbindung 15 kann dabei als direkte Verbindung zwischen der Sensorik 11 bzw. dem Bewegungsvorgabemittel 10 und dem Handterminal 4 ausgebildet sein. Alternativ oder in Kombination dazu kann auch eine indirekte Datenverbindung 16 vorgesehen sein, welche ausgehend von einer externen Sensorik 12 über eine oder mehrere elektronische Zwischen- oder Basisstationen bzw. Steuervorrichtungen 3" und 3 zum mobilen Handterminal 4 verläuft.

Die Datenverbindung 15 bzw. 16 kann dabei drahtgebunden oder kabellos ausgeführt sein. Wesentlich ist, dass die von der Sensorik 11 bzw. 12 ermittelten Orientierungs- bzw. Positionsdaten des Bewegungsvorgabemittels 10 via eine geeignete Datenverbindung 15 bzw. 16 an das mobile Handterminal 4 übermittelt werden und von diesem zumindest teilweise verwertet bzw. weiterverarbeitet werden, bevor die entsprechenden Steuerkommandos bzw. Steuerbefehle des Bewegungsvorgabemittels 10 vom Industrieroboter 2 ausgeführt werden.

Wesentlich ist in diesem Zusammenhang also weiters, dass vom händisch zu führenden Bewegungsvorgabemittel 10 ausgehende Steuerbefehle vom Industrieroboter 2 nur dann umgesetzt werden, wenn gleichzeitig eine Sicherheitsschalteinrichtung 7, insbesondere wenigstens ein Zustimmtaster 8, am mobilen Handterminal 4 durch eine Bedienperson manuell derart betätigt wird, dass eine Zustimmung zur Ausführung von potentiell gefährdenden Bewegungen oder eine Zustimmung zur Veränderung von potentiell sicherheitskritischen Abläufen des Industrieroboters 2 signalisiert wird. Diese Signalisierung wird von der Bedienperson durch Betätigung des Zustimmtasters 8 erreicht und vom Steuerungssystem 1 bzw. vom Handterminal 4 als aktive bzw. bewusste Zustimmung zur Ausführung potentiell gefährdender Aktionen erkannt. Damit werden vor allem unbeabsichtigte bzw. ungewollte Auslösungen von Aktionen bzw. unabsichtliche Einleitungen von Bewegungen des Industrieroboters 2 zu einem hohen Ausmaß vermieden.

Wie in Fig. 1 schematisch dargestellt, kann die Datenverbindung 15 zwischen der im Bewegungsvorgabemittel 10 integrierten Sensorik 11 und dem Handterminal 4 durch eine Funkverbindung umgesetzt sein. Alternativ ist es ebenso möglich, die Datenverbindung 15' durch eine Leitungsverbindung auszuführen, wie dies in strichlierten Linien dargestellt wurde. Aufgrund der unmittelbaren Nähe zwischen dem Bewegungsvorgabemittel 10 und dem Handterminal 4 ist nämlich auch die Ausbildung einer Leitungsverbindung ohne wesentliche Komfort- bzw. Ergonomieeinbussen möglich.

Während eines erfindungsgemäßen Bedienvorgangs wird nämlich das Handterminal 4 von der ersten Hand der Bedienperson derart gehalten, dass ein bedarfsweiser Zugriff auf die Sicherheitsschalteinrichtung 7, insbesondere auf den Zustimmtaster 8, ermöglich ist. Darüber hinaus wird das händisch zu führende Bewegungsvorgabemittel 10 von der zweiten Hand dieser Bedienperson derart gehalten bzw. im Raum derart geführt, dass wunschgemäße Verfahrbewegungen, neue Sollpositionen oder Ablaufveränderungen für den Industrieroboter 2 vorgegeben werden, welche von der Sensorik 11 bzw. 12 erfasst und vom Steuerungssystem 1 bzw. Industrieroboter 2 entsprechend umgesetzt werden.

Erfindungsgemäß ist am händisch zu führenden Bewegungsvorgabemittel 10 wenigstens ein manuell zu betätigendes Bedienelement 17 vorgesehen. Mittels diesem wenigstens einen manuell zu betätigenden Bedienelement 17 am Bewegungsvorgabemittel 10 ist eine Umsetzung bzw. Initiierung von mit dem Bewegungsvorgabemittel 10 vorgegebenen Bewegungen oder Abläufen des Industrieroboters 2 auslös- bzw. einleitbar. Dieses Bedienelement 17 mit Auslösefunktion ist jedoch nur dann wirksam, wenn gleichzeitig mit der Sicherheitsschalteinrichtung 7 am mobilen Handterminal 4, insbesondere mit dem Zustimmtaster 8, eine Zustimmung zur Ausführung von Bewegungen oder Abläufen des Industrieroboters 2 signalisiert wird. Das heißt, dass das eine Auslösefunktion aufweisende Bedienelement 17 am Bewegungsvorgabemittel 10 nur dann aktiv bzw. wirksam werden kann, wenn gleichzeitig mit der Sicherheitsschalteinrichtung 7 am mobilen Handterminal 4 entsprechende Zustimmung signalisiert wird. Das heißt, dass das optional ausgebildete Bedienelement 17 zur Auslösung von Bewegungen oder Veränderungen mit der Sicherheitsschalteinrichtung 7 am Handterminal 4, insbesondere mit dessen Zustimmtaster 8, in serieller Wirkverbindung steht. Dadurch wird die Gefahr von unbeabsichtigten bzw. missverständlichen Bedienhandlungen weiter reduziert. Weiters wird der Bedienkomfort gesteigert, da nicht sämtliche Bewegungen von der Sensorik 11 bzw. 12 respektive vom Steuerungssystem 1 als Bewegungsvorgabe gewertet werden. Grundsätzlich ist jedoch auch eine Bewegungsvorgabe ohne diesem Bedienelement 17 ermöglicht, nachdem eine Ausführung von potentiell gefahrbringenden Bewegungsabläufen oder Zustandsveränderungen eine Betätigung von wenigstens einem Zustimmtaster 8 am mobilen Handterminal 4 bedingt.
Zweckmäßigerweise werden die Informationen über den Betätigungszustand des wenigstens einen am Bewegungsvorgabemittel 10 ausgebildeten Bedienelementes 17 über die Datenschnittstelle 13 des Bewegungsvorgabemittels 10, insbesondere über die Datenverbindung 15 bzw. 15', an das mobile Handterminal 4 übertragen. Im Handterminal 4 bzw. innerhalb des Steuerungssystems 1 erfolgt dann eine entsprechende Auswertung der Informationen über den Betätigungszustand des wenigstens einen Bedienelementes 17.

Die Datenverbindung 15, 15' zwischen dem händisch zu führenden Bewegungsvorgabemittel 10 und dem mobilen Handterminal 4 wird vorzugsweise mittels einer ersten Datenschnittstelle 13,13' im händisch zu führenden Bewegungsvorgabemittel 10 und einer korrespondierenden, weiteren Datenschnittstelle 18, 18' im bzw. am mobilen Handterminal 4 aufgebaut. Die jeweiligen Datenschnittstellen 13, 13' und 18, 18' sind dabei je nach vorgesehener Datenverbindung kontaktbehaftet oder drahtlos, insbesondere funktechnisch ausgeführt.

Entsprechend einer zweckmäßigen Ausführung sind die Sensorik 11 und die erste Datenschnittstelle 13 im Bewegungsvorgabemittel 10 angeordnet, wobei die Datenverbindung 15 über eine drahtlose Verbindung, insbesondere über eine Funkverbindung 19 aufgebaut wird. Hierzu ist die erste Datenschnittstelle 13 und die damit korrespondierende, weitere Datenschnittstelle 18 am mobilen Handterminal 4 durch funktechnische Sende- und/oder Empfangsvorrichtungen zum Senden und/oder Empfangen elektromagnetischer Wellen gebildet. Diese Sende- und/oder Empfangsvorrichtungen können dabei durch Vorrichtungen entsprechend dem Bluetooth-, WLAN- oder ZigBee-Standard und durch ähnliche aus dem Stand der Technik bekannte, drahtlose Datenübertragungssysteme gebildet sein.

Alternativ ist es auch möglich, dass die erste Datenschnittstelle 13' im bzw. am Bewegungsvorgabemittel 10 zum Aufbau einer draht- oder kabelgebundenen Datenverbindung 15' vorgesehen ist. Hierfür ist die erste Datenschnittstelle 13' und die damit korrespondierende, weitere Datenschnittstelle 18' durch elektrische Leitungsschnittstellen gebildet, zwischen welchen eine Kabelverbindung 20 aufgebaut ist, wie dies mit strichlierten Linien angedeutet wurde.

Entsprechend einer vorteilhaften Maßnahme ist vorgesehen, dass über die Datenverbindung 15 bzw. 15' zwischen dem mobilen Handterminal 4 und dem händisch geführten Bewegungsvorgabemittel 10 zusätzlich zu Informationen über den jeweiligen Betätigungszustand des Bedienelementes 17, welches zum bedienerseitigen Starten oder Auslösen der entsprechenden Bewegungen oder Abläufe des Industrieroboters 2 vorgesehen ist, auch Daten betreffend die Orientierung und/oder die Position des händisch zu führenden Bewegungsvorgabemittels 10 in Bezug auf den dreidimensionalen Raum an das mobile Handterminal 4 übertragen werden.

Zweckmäßig ist es außerdem, eine auf Adressen oder Kennungen basierende, eindeutige Zuordnung zwischen dem händisch zu führenden Bewegungsvorgabemittel 10 und dem mobilen Handterminal 4 aufzubauen, bevor die mit dem händisch zu führenden Bewegungsvorgabemittel 10 generierten Daten als Steuerungsvorgabe für entsprechende Bewegungen oder Abläufe des Industrieroboters 2 eingesetzt werden. Dadurch werden irrtümliche Paarungen bzw. einem Missverständnis unterliegende, scheinbare Gruppierungen zwischen einem händisch zu führenden Bewegungsvorgabemittel 10 und einem Handterminal 4 hintan gehalten. Somit können auch durch diese Maßnahme potentiell gefährdende bzw. kritische Zustände innerhalb einer automatisierten Anlage vermieden werden. Derartige Verwirrungen bzw. Irrtümer seitens der Bedienperson können insbesondere dann auftreten, wenn die Datenverbindung 15 zwischen dem händisch zu führenden Bewegungsvorgabemittel 10 und dem mobilen Handterminal 4 als drahtlose Verbindung ausgeführt ist. Im Falle einer Leitungs- bzw. Kabelverbindung 20 zwischen den genannten Komponenten ist die Gefahr eines Missverständnisses in Bezug auf die tatsächlich vorliegende, gegenseitige Zuordnung bzw. funktionale Kopplung wesentlich geringer.

Eine verwechslungsfreie und eindeutige Zuordnung zwischen einem händisch zu führenden Bewegungsvorgabemittel 10 und einem mobilen Handterminal wird zweckmäßigerweise durch eine datentechnische Sicherheitskennung aufgebaut, welche erhöhte Fehlersicherheit und Funktionszuverlässigkeit bietet.

Entsprechend einer vorteilhaften Maßnahme ist vorgesehen, dass vor oder während der Ausführung von Bewegungen oder vor oder während der Aktivierung von sonstigen sicherheitskritischen Abläufen, wie zum Beispiel Strombeaufschlagungen, Hitzeeinwirkungen oder von sonstigen, potentiell gefahrbringenden Prozessaktivierungen, einmalig oder wiederholt überprüft wird, ob das händisch zu führende Bewegungsvorgabemittel 10 von jenem Benutzer gehalten oder geführt wird, der auch das mobile Handterminal 4 hält und mittels der Sicherheitsschalteinrichtung 7 eine Zustimmung zur Ausführung dieser potentiell gefahrbringenden Bewegungen bzw. zur Ausführung anderer potentiell sicherheitskritischer Abläufe signalisiert. Dadurch wird vermieden, dass die Zustimmfunktion, insbesondere das Handterminal 4 mit der Sicherheitsschalteinrichtung 7, einer ersten Person zugeordnet wird und die Vorgabe- bzw. Auslösefunktion mittels dem Bewegungsvorgabemittel 10 einer weiteren Bedienperson zugeteilt wird. Auch durch diese automatisierte Kontroll- bzw. Gegenmaßnahme kann die Gefahr bzw. das Risiko von Unfällen bzw. Missbräuchen reduziert werden.

Entsprechend einer zweckmäßigen Ausführung ist vorgesehen, dass die Überprüfung bezüglich des Haltens des mobilen Handterminals 4 und des Haltens oder Führens des händisch zu führenden Bewegungsvorgabemittel 10 durch die selbe Person, insbesondere durch eine einzige Bedienperson, anhand einer definierten Signalübertragung zwischen dem händisch geführten Bewegungsvorgabemittel 10 und dem mobilen Handterminal 4 vorgenommen wird. Ein Teilabschnitt des Signalpfades zwischen dem händisch geführten Bewegungsvorgabemittel 10 und dem mobilen Handterminal 4 wird dabei durch den Körper der Bedienperson gebildet oder durch den Körper der Bedienperson beeinflusst. Anhand dieses Einflusses auf die Signalübertragungsstrecke oder anhand des über den Körper der Bedienperson aufgebauten Signalpfades, kann in einfacher Art und Weise darauf Rückschluss gezogen werden, ob das mobile Handterminal 4 oder das Bewegungsvorgabemittel 10 von nur einer Bedienperson gehalten bzw. bedient wird. Auch dadurch kann das Risiko von Unfällen bzw. Gefährdungen gesenkt werden. Weiters kann vorgesehen sein, dass nur bei Körperkontakt oder nur bei unmittelbarer Nähe des Körpers einer Bedienperson gegenüber dem händisch zu führenden Bewegungsvorgabemittel 10 sowie gegenüber dem mobilen Handterminal 4 eine Signalübertragung ermöglicht wird, oder mit ausreichender Signalstärke aufgebaut wird. Insbesondere kann zwischen dem händisch zu führenden Bewegungsvorgabemittel 10 und dem mobilen Handterminal 4 eine drahtlose Datenverbindung 15, insbesondere eine Funkverbindung, aufgebaut sein. Anhand der Signalstärke oder der Übertragungsqualität kann dann automatisiert erkannt oder überprüft werden, ob das händisch geführte Bewegungsvorgabemittel 10 und das mobile Handterminal 4 von derselben Bedienperson gehalten wird.

Entsprechend einer anderen Vorgangsweise kann die kapazitive Nahfeldkopplung zwischen dem Körper einer Bedienperson und Antennen 21, 22 zum Aufbau einer drahtlosen Datenverbindung 15 zwischen dem Bewegungsvorgabemittel 10 und dem mobilen Handterminal 4 zur Überprüfung einer "Ein-Personen-Handhabung" genutzt werden. Hierfür ist es auch möglich, die kapazitive Nahfeldkopplung zwischen dem Körper einer Bedienperson und spezifisch vorgesehenen bzw. separat ausgebildeten Antennen oder Elektrodenanordnungen 23, 24, welche zur Erzeugung definierter elektrischer Felder ausgebildet sind, zu nutzen, um automatisiert zu erkennen bzw. zu überprüfen, ob eine unmittelbare Nähe einer Bedienperson vorliegt bzw. ob das mobile Handterminal 4 und das händisch geführte Bewegungsvorgabemittel 10 von nur einer Bedienperson gehalten wird. Diese kapazitive Nahfeldkopplung beruht auf dem physikalischen Prinzip, dass der Körper der Bedienperson einen Einfluss auf das elektrische Feld von Antennen 21, 22 bzw. von Elektrodenanordnungen 23, 24 hat bzw. die Eigenschaften dieses elektrischen Feldes verändert. Dieser Einfluss wird in einfacher Art und Weise dazu genutzt, um durch eine Auswertungselektronik feststellen zu können, ob sich im Umgebungsbereich bzw. im Nahbereich zum mobilen Handterminal 4 bzw. im Nahbereich zum händisch zu führenden Bewegungsvorgabemittel 10 eine Person befindet. Widrigenfalls wird vom Steuerungssystem 1 bzw. vom Handterminal 4 angenommen, dass zumindest eine der genannten Komponenten weggelegt ist, zu weit entfernt ist, oder einer anderen Person zugeordnet wurde.

Zweckmäßigerweise wird die kapazitive Nahfeldkopplung zwischen dem händisch zu führenden Bewegungsvorgabemittel 10 und dem Körper einer Bedienperson durch eine Elektrodenanordnung 23 am händisch zu führenden Bewegungsvorgabemittel 10 überprüft bzw. detektiert. Eine Veränderung des elektrischen Feldes dieser Elektrodenanordnung 23, insbesondere eine Veränderung der kapazitiven Eigenschaften der Elektrodenanordnung 23 in Bereiche außerhalb eines definierten Wertebereiches, wird zur Erkennung oder Überprüfung der An- und Abwesenheit einer Bedienperson in Bezug auf einen unmittelbaren Nahbereich zum Bewegungsvorgabemittel 10 gewertet.

Entsprechend einer vorteilhaften Maßnahme wird seitens des Steuerungssystems 1 bzw. vom mobilen Handterminal 4 und/oder vom Bewegungsvorgabemittel 10 die Gleichzeitigkeit des Vorliegens eines Körperkontaktes des Benutzers gegenüber dem mobilen Handterminal 4 sowie gegenüber dem händisch zu führenden Bewegungsvorgabemittel 10 erkannt oder überprüft. Bei negativem Überprüfungsergebnis wird davon ausgegangen, dass die genannten Komponenten nicht von ein- und derselben Person gehalten werden, sodass die Ausführung von potentiell gefahrbringenden Steuerbefehlen bevorzugt verweigert bzw. unterbunden oder auch abgebrochen wird. Beispielsweise kann hierfür an einem Gehäuse des händisch zu führenden Bewegungsvorgabemittels 10 und an einem Gehäuse des mobilen Handterminals 4 jeweils zumindest ein galvanischer Koppelpunkt 25, 26, insbesondere eine elektrische Kontaktfläche, ausgebildet sein. Der Körper der Bedienperson ist dabei zum Aufbau einer elektrisch leitenden Verbindung zwischen den genannten Koppelpunkten 25, 26 vorgesehen, wodurch bei bestehender bzw. ausreichend leitfähiger elektrischer Verbindung eindeutig erkannt bzw. überprüft werden kann, ob das mobile Handterminal 4 und das händisch geführte Bewegungsvorgabemittel 10 von einer einzigen Person gehalten wird. Für den Fall, dass der Bediener nicht jeweils zumindest einen Koppelpunkt 25, 26 am händisch zu führenden Bewegungsvorgabemittel 10 und am mobilen Handterminal berührt, liegt eine hochohmige bzw. unterbrochene oder keine ausreichend leitfähige Verbindung zwischen den genannten Komponenten vor, sodass das Steuerungssystem 1 bzw. das mobile Handterminal 4 und/oder das händisch zu führende Bewegungsvorgabemittel 10 die Ausführung von potentiell sicherheitskritischen bzw. gefährdenden Bewegungen oder Abläufen des Industrieroboters 2 automatisch verweigert. Eine solche Verweigerung wird dem Bediener bevorzugt in geeigneter Art und Weise signalisiert, beispielsweise optisch, akustisch und/oder durch mechanische Vibrationen angezeigt. Die zuvor genannten Folgemaßnahmen sind selbstverständlich mit sämtlichen, hierin beschriebenen Evaluierungsmaßnahmen kombinierbar.

Entsprechend einer vorteilhaften Maßnahme ist vorgesehen, dass über den Körperkontakt einer Bedienperson gegenüber dem mobilen Handterminal 4 und gegenüber dem händisch geführten Bewegungsvorgabemittel 10 auch die Daten für die Bewegungssteuerung bzw. Ablaufprogrammierung des Industrieroboters 2 ausgehend vom händisch geführten Bewegungsvorgabemittel 10 über den Körper des Benutzers zum mobilen Handterminal 4 übertragen werden. Auch durch diese Maßnahme ist sichergestellt, dass potentiell gefahrbringende Aktionen nur dann ausgeführt werden können, wenn die genannten Komponenten von einer einzigen Bedienperson gehalten bzw. getragen werden. Nur eine einzige Person ist nämlich imstande, im Bedarfsfall für eine unverzügliche Stillsetzung des Industrieroboters 2 zu sorgen und eine unmissverständliche bzw. eindeutige Zustimmung zur Ausführung potentiell gefahrbringender Aktionen zu geben.

Die zuvor aufgezeigten Evaluierungsmöglichkeiten bzw. Maßnahmen in Bezug auf eine besonders zweckmäßige bzw. aus Sicherheitsgründen anzustrebende "Einpersonen-Handhabung" können dabei vom Handterminal 4 und/oder vom händisch zu führenden Bewegungsvorgabemittel 10 vorgenommen werden. Ebenso kann das Steuerungssystem 1 per se eine derartige Funktionalität erfüllen bzw. eine entsprechende Teilaufgabe übernehmen.

Entsprechend einer zweckmäßigen Vorgangsweise ist vorgesehen, dass das händisch zu führende Bewegungsvorgabemittel 10 an einer Ablagevorrichtung 27 am mobilen Handterminal 4 abgelegt oder befestigt wird, wenn zum Beispiel eine Hand der Bedienperson für Bedienhandlungen direkt am mobilen Handterminal 4 benötigt wird. Insbesondere kann das händisch zu führende Bewegungsvorgabemittel 10 im Bedarfsfall einer Ablagevorrichtung 27 am mobilen Handterminal 4 zugeordnet werden, sodass die Bedienperson zumindest eine Hand frei bekommt, nachdem mit der anderen Hand üblicherweise das mobile Handterminal 4 gehalten wird bzw. in eine Ausrichtung gebracht wird, die eine Einsichtnahme auf das Display 5 bzw. auf die Bedienelemente 6, 6' ermöglicht. Die freie bzw. frei gewordene Hand kann sodann zur Betätigung diverser Bedienelemente 6, 6' bzw. eines Touchscreens am mobilen Handterminal 4 eingesetzt werden. Beispielsweise kann sodann ein als Joystick oder Jog-Rad ausgeführtes Bedienelement 6 am mobilen Handterminal 4 zur alternativ oder kombinatorisch eingesetzten Bewegungssteuerung des entsprechenden Industrieroboters 2 herangezogen werden.

Entsprechend einer zweckmäßigen Weiterbildung kann das grundsätzlich händisch zu führende Bewegungsvorgabemittel 10 in oder an einer Ablagevorrichtung 27 am mobilen Handterminal 4 abgelegt werden, wobei die Wirkung von zumindest einem am mobilen Handterminal 4 angeordneten Bedienelement 6 zur Bewegungssteuerung des Industrieroboters 2 in Abhängigkeit der von der Bedienperson gewählten Orientierung und/oder Position des Handterminals 4 relativ zum Standort des Industrieroboters 2 angepasst wird. Insbesondere kann dadurch erreicht werden, dass bei einer Auslenkung des Bedienelementes 6 am mobilen Handterminal 4 in eine bestimmte Richtung, auch der Industrieroboter 2, insbesondere dessen Werkzeugaufnahme 28 (TCP) unabhängig vom Standort der Bedienperson gegenüber dem Industrieroboter 2 in die gleiche Richtung bewegt wird. Insbesondere kann durch eine Zuordnung bzw. mechanische Verbindung des Bewegungsvorgabemittels 10 mit dem Handterminal 4 die Verfahrrichtung des Industrieroboters 2 an die Auslenkrichtung eines Bedienelementes 6, insbesondere an die Stellrichtung eines Joysticks angeglichen werden. Dadurch ist eine deutlich einfachere, intuitive Bedienung eines Industrieroboters 2 in Bezug auf die von der Bedienperson gewünschten Verfahrbewegungen bzw. Verfahrrichtungen des Industrieroboters 2 ermöglicht.

Vor allem dann, wenn das händisch zu führende Bewegungsvorgabemittel 10 für den Aufbau einer drahtlosen Datenverbindung 15 zum mobilen Handterminal 4 ausgebildet ist, ist es zweckmäßig, wenn das händisch zu führende Bewegungsvorgabemittel 10 mittels einer elektrochemischen Energiequelle 29 mit elektrischer Energie versorgt wird. Entsprechend einer praktikablen Maßnahme wird die elektrochemische Energiequelle 29 während der Zuordnung des Bewegungsvorgabemittels 10 zur Ablagevorrichtung 27 am mobilen Handterminal 4 mit elektrischer Energie versorgt bzw. geladen. Die Energieübertragung, welche ausgehend vom Handterminal 4 bzw. von dessen Ablagevorrichtung 27 in Richtung zur Energiequelle 29 verläuft, insbesondere auf elektrochemische Akkumulatoren des Bewegungsvorgabemittels 10 gerichtet ist, erfolgt durch aus dem Stand der Technik bekannte Maßnahmen bzw. Prinzipien zur Energieübertragung. Beispielsweise kann diese Energieübertragung kontaktbehaftet erfolgen, indem korrespondierende Kontakte an der Ablagevorrichtung 27 und am Bewegungsvorgabemittel 10 ausgebildet sind. Alternativ ist es ebenso möglich, eine induktive Energieübertragung vorzusehen, wobei am Handterminal 4 bzw. an der Ablagevorrichtung 27 und am bzw. im Bewegungsvorgabemittel 10 miteinander korrespondierende, elektromagnetische Spulen ausgebildet sind. Über diese miteinander korrespondierenden Spulen wird elektrische Energie in elektromagnetische Wechselfelder umgeformt, welche elektromagnetischen Wechselfelder wieder in elektrische Energie umgewandelt werden, sodass elektrische Energie ausgehend vom Handterminal 4 draht- bzw. kontaktlos zum Bewegungsvorgabemittel 10 übertragen wird. Die vom Handterminal 4 generierten elektromagnetischen Felder werden dabei von der Spulenanordnung im händisch zu führenden Bewegungsvorgabemittel 10 in elektrische Energie umgewandelt und zur Aufladung der Energiequelle 29 herangezogen.

In Verbindung mit den zuvor beschriebenen Erfassungsmethoden zur Detektierung der Nähe einer Person gegenüber dem Bewegungsvorgabemittel 10 oder in Bezug auf einen unmittelbaren Kontakt mit einer Person, ist es weiters zweckmäßig, in Abhängigkeit des Nicht-Vorliegens und Vorliegens einer Nähe oder eines Körperkontaktes zwischen einer Bedienperson und dem Bewegungsvorgabemittel 10 die Funktionsweise oder den Betriebszustand des Bewegungsvorgabemittels 10 und/oder des Handterminals 4 und/oder des Industrieroboters 2 automatisch zu verändern, insbesondere einen Energiesparmodus oder ein bestimmten Bedienmodus zu aktivieren und deaktivieren, um ein optimiertes Energie-Management bzw. einen erhöhten Benutzungskomfort zu erzielen.

Entsprechend einer zweckmäßigen Maßnahme ist weiters vorgesehen, dass am mobilen Handterminal 4 und/oder am händisch zu führenden Bewegungsvorgabemittel 10 signalisiert wird, ob das mobile Handterminal 4 und das händisch zu führende Bewegungsvorgabemittel 10 datentechnisch oder steuerungstechnisch zu einem Funktionspaar 30 kombiniert sind. Ein plangemäßes Funktionspaar 30 liegt dann vor, wenn das händisch zu führende Bewegungsvorgabemittel 10 und das mobile Handterminal 4 derart miteinander gekoppelt bzw. signaltechnisch derart miteinander verbunden sind, dass die mittels dem händisch zu führenden Bewegungsvorgabemittel 10 vorgegebenen Bewegungs- oder Ablaufveränderungen entsprechenden Einfluss auf die Bewegungsabläufe oder Prozessabläufe des Industrieroboters 2 haben können. Hierfür ist entsprechend den vorhergegangenen Beschreibungen von einer Bedienperson über zumindest einen Zustimmtaster 8 am mobilen Handterminal 4 zusätzlich eine entsprechende Zustimmung zur Ausführung von potentiell gefahrbringenden Veränderungen des Industrieroboters 2 zu signalisieren. Die Signalisierung einer aufgebauten bzw. vorliegenden Paarung in Bezug auf das händisch zu führende Bewegungsvorgabemittel 10 und das mobile Handterminal 4 erfolgt mittels wenigstens einem Anzeigeelement 31 und/oder 32 am händisch zu führenden Bewegungsvorgabemittel 10 und/oder am mobilen Handterminal 4. Dieses Anzeigeelement 31 und/oder 32 kann durch eine einfache Signalleuchte oder durch ein einfaches Display, beispielsweise eine 7-Segment- oder eine Punktmatrix-Anzeige gebildet sein. Alternativ dazu kann selbstverständlich auch ein Nichtvorliegen einer Funktionspaarung signalisiert werden. Ebenso ist es möglich, anstelle oder in Kombination zu optischen Anzeigeelementen 31, 32 wenigstens einen akustischen Signalgeber und/oder Vibrationsgeber vorzusehen.

Das mobile Handterminal 4 kann in an sich bekannter Art und Weise über eine Leitungsverbindung 33 in das Steuerungssystem 1 eingebunden sein. Insbesondere kann die elektronische Steuervorrichtung 3' des mobilen Handterminals 4 über eine Leitungsverbindung 33 daten- bzw. steuerungstechnisch mit den sonstigen Steuervorrichtungen 3, 3" innerhalb des Steuerungssystems 1 gekoppelt sein. Ebenso ist es möglich, anstelle dieser Leitungsverbindung 33 eine drahtlose Verbindung vorzusehen, über welche das mobile Handterminal 4 bzw. dessen Steuervorrichtung 3' kabel- bzw. kontaktlos in das Steuerungssystem 1 für wenigstens einen Industrieroboter 2 integriert ist bzw. integriert werden kann.

Die Ausführungsbeispiele zeigen mögliche Ausführungsvarianten des Steuerungssystems 1, des mobilen Handterminals 4 und des händisch zu führenden Bewegungsvorgabemittels 10, wobei an dieser Stelle bemerkt sei, dass die Erfindung nicht auf die speziell dargestellten Ausführungsvarianten derselben eingeschränkt ist.

Der Ordnung halber sei abschließend darauf hingewiesen, dass zum besseren Verständnis des Aufbaus des Steuerungssystems 1, des mobilen Handterminals 4 und des händisch zu führenden Bewegungsvorgabemittels 10 dieses bzw. deren Bestandteile teilweise unmaßstäblich und/oder vergrößert und/oder verkleinert dargestellt wurden.

### Bezugszeichenaufstellung

- 1: Steuerungssystem
- 2: Industrieroboter
- 3, 3', 3": Steuervorrichtung
- 4: Handterminal
- 5: Display
- 6, 6': Bedienelement
- 7: Sicherheitsschalteinrichtung
- 8: Zustimmtaster
- 9: NOT-AUS-Schaltvorrichtung
- 10: Bewegungsvorgabemittel
- 11: Sensorik
- 12: Sensorik
- 13, 13': Datenschnittstelle
- 14: Datenschnittstelle
- 15, 15': Datenverbindung
- 16: Datenverbindung
- 17: Bedienelement
- 18, 18': Datenschnittstelle
- 19: Funkverbindung
- 20: Kabelverbindung
- 21: Antenne
- 22: Antenne
- 23: Elektrodenanordnung
- 24: Elektrodenanordnung
- 25: Koppelpunkt
- 26: Koppelpunkt
- 27: Ablagevorrichtung
- 28: Werkzeugaufnahme
- 29: Energiequelle
- 30: Funktionspaar
- 31: Anzeigeelement
- 32: Anzeigeelement
- 33: Leitungsverbindung

## Patentansprüche

1. Verfahren zum Programmieren oder Vorgeben von Bewegungen oder Abläufen eines Industrieroboters (2), wobei über ein händisch zu führendes Bewegungsvorgabemittel (10) mit integrierter und/oder externer Sensorik (11; 12) zur Ermittlung der Orientierung und/oder Position des händisch zu führenden Bewegungsvorgabemittels (10) im Raum zumindest ein Teil der Daten für die Bewegungssteuerung oder Ablaufprogrammierung des Industrieroboters (2) generiert werden, **dadurch gekennzeichnet, dass** die im händisch zu führenden Bewegungsvorgabemittel (10) integrierte Sensorik (11) und/oder die externe Sensorik (12) Daten für die Bewegungssteuerung oder Ablaufprogrammierung des Industrieroboters (2) über zumindest eine Datenschnittstelle (13; 14) und zumindest eine dazugehörige Datenverbindung (15; 16) an ein von der Bedienperson zu tragendes, mobiles Handterminal (4) übermittelt, welches mobile Handterminal (4) zur Veränderung und/oder Beobachtung von Zuständen des Industrieroboters (2) vorgesehen ist, und dass vom händisch zu führenden Bewegungsvorgabemittel (10) ausgehende Steuerbefehle vom Industrieroboter (2) nur dann ausgeführt werden, wenn mittels wenigstens einem manuell zu betätigenden Bedienelement (17) am händisch zu führenden Bewegungsvorgabemittel (10) eine Ausführung der mit dem Bewegungsvorgabemittel (10) vorgegebenen Bewegungen oder Abläufe des Industrieroboters (2) angezeigt wird und gleichzeitig eine Sicherheitsschalteinrichtung (7) am mobilen Handterminal (4) durch die Bedienperson manuell derart betätigt wird, dass eine Zustimmung zur Ausführung von Bewegungen oder Abläufen oder zur Veränderung von Abläufen des Industrieroboters (2) signalisiert wird.

2. Verfahren nach Anspruch 1, **dadurch gekennzeichnet, dass** das mobile Handterminal (4) zur umfassenden Veränderung und/oder Beobachtung von Betriebszuständen oder Abläufen des Industrieroboters (2) eingesetzt und von der ersten Hand der Bedienperson gehalten wird, und dass das händisch zu führende Bewegungsvorgabemittel (10) von der zweiten Hand dieser Bedienperson gehalten oder geführt wird.

3. Verfahren nach Anspruch 1, **dadurch gekennzeichnet, dass** die Sicherheitsschalteinrichtung (7), insbesondere wenigstens ein Zustimmtaster (8) mit erhöhter Funktions- oder Fehlersicherheit, am mobilen Handterminal (4) derart positioniert ist, dass mit nur einer Hand der Bedienperson ein Halten des mobilen Handterminals (4) und gleichzeitig eine bedarfsweise Betätigung der Sicherheitsschalteinrichtung (7), insbesondere von wenigstens einem Zustimmtaster (8), ermöglicht wird.

4. Verfahren nach Anspruch 1, **dadurch gekennzeichnet, dass** Informationen zumindest über den Betätigungszustand des wenigstens einen Bedienelementes (17) über die Datenverbindung (15; 16) an das mobile Handterminal (4) übertragen werden.

5. Verfahren nach Anspruch 1, **dadurch gekennzeichnet, dass** die Datenverbindung (15; 15') mittels einer ersten Datenschnittstelle (13; 13') im händisch zu führenden Bewegungsvorgabemittel (10) und einer korrespondierenden, weiteren Datenschnittstelle (18, 18') im mobilen Handterminal (4) aufgebaut wird.

6. Verfahren nach Anspruch 1, **dadurch gekennzeichnet, dass** über die Datenverbindung (15; 15'; 16) zwischen dem mobilen Handterminal (4) und dem händisch zu führenden Bewegungsvorgabemittel (10) zusätzlich zu Informationen über den Betätigungszustand des Bedienelementes (17) zum bedienerseitigen Starten oder Auslösen der entsprechenden Bewegungen oder Abläufe des Industrieroboters (2), auch Daten betreffend die Orientierung und/oder Position des händisch zu führenden Bewegungsvorgabemittels (10) im Raum an das mobile Handterminal (4) übertragen werden.

7. Verfahren nach Anspruch 1, **dadurch gekennzeichnet, dass** vor oder während der Ausführung von potentiell gefährdenden Bewegungen oder sonstigen sicherheitskritischen Abläufen des Industrieroboters (2) einmalig oder wiederholt überprüft wird, ob das händisch zu führende Bewegungsvorgabemittel (10) von jenem Benutzer gehalten oder geführt wird, der auch das mobile Handterminal (4) hält und mittels der Sicherheitsschalteinrichtung (7) eine Zustimmung zur Ausführung von potentiell gefährdenden Bewegungen oder sonstigen sicherheitskritischen Abläufen des Industrieroboters (2) signalisiert.

8. Verfahren nach Anspruch 1, **dadurch gekennzeichnet, dass** eine Überprüfung bezüglich des Haltens des mobilen Handterminals (4) und des Haltens oder Führens des händisch zu führenden Bewegungsvorgabemittels (10) durch die gleiche Person, insbesondere durch eine einzige Bedienperson, mittels einer Signalübertragung vom händisch zu führenden Bewegungsvorgabemittel (10) zum mobilen Handterminal (4) vorgenommen wird, wobei ein Teilabschnitt des Signalpfades zwischen dem händisch zu führenden Bewegungsvorgabemittel (10) und dem mobilen Handterminal (4) durch den Körper der Bedienperson gebildet oder vom Körper der Bedienperson beeinflusst wird.

9. Verfahren nach Anspruch 8, **dadurch gekennzeichnet, dass** nur bei Körperkontakt oder nur bei unmittelbarer Nähe des Körpers einer Bedienperson zum händisch zu führenden Bewegungsvorgabemittel (10) sowie zum mobilen Handterminal (4) eine Signalübertragung ermöglicht wird, oder mit ausreichender Signalstärke aufgebaut wird.

10. Verfahren nach Anspruch 1, **dadurch gekennzeichnet, dass** ein gleichzeitiges Vorliegen eines Körperkontaktes durch einen Benutzer gegenüber dem mobilen Handterminal (4) sowie gegenüber dem händisch zu führenden Bewegungsvorgabemittel (10) erkannt oder überprüft wird.

11. Verfahren nach Anspruch 1, **dadurch gekennzeichnet, dass** in Abhängigkeit des Nicht-Vorliegens und Vorliegens eines Körperkontaktes zwischen einer Bedienperson und dem Bewegungsvorgabemittel (10) die Funktionsweise oder der Betriebszustand des Bewegungsvorgabemittels (10) und/oder des Handterminals (4) und/oder des Industrieroboters (2) automatisch verändert wird, insbesondere ein Energiesparmodus oder ein bestimmter Bedienmodus aktiviert und deaktiviert wird.

12. Verfahren nach Anspruch 1, **dadurch gekennzeichnet, dass** ein Ablegen des Bewegungsvorgabemittels (10) an einer Ablagevorrichtung (27) am mobilen Handterminal (4) technisch erfasst und in Abhängigkeit vom automatisiert festgestellten Ablagezustand des Bewegungsvorgabemittels (10) die Funktionsweise oder der Betriebszustand des Bewegungsvorgabemittels (10) und/oder des Handterminals (4) und oder des Roboters (2) automatisch verändert wird, insbesondere ein Energiesparmodus oder ein bestimmter Bedienmodus aktiviert oder deaktiviert wird.

13. Verfahren nach Anspruch 1, **dadurch gekennzeichnet, dass** das händisch zu führende Bewegungsvorgabemittel (10) mittels einer elektrochemischen Energiequelle (29) mit elektrischer Energie versorgt wird und die elektrochemische Energiequelle (29) während einer Zuordnung des händisch zu führenden Bewegungsvorgabemittels (10) zu einer Ablagevorrichtung (27) am mobilen Handterminal (4) mit elektrischer Energie geladen wird.

14. Verfahren nach Anspruch 1, **dadurch gekennzeichnet, dass** das händisch zu führende Bewegungsvorgabemittel (10) in einer oder an einer Ablagevorrichtung (27) am mobilen Handterminal (4) abgelegt wird und die Wirkung von zumindest einem am mobilen Handterminal (4) angeordneten Bedienelement (6, 6') zur Bewegungssteuerung eines Industrieroboters (2) in Abhängigkeit der von der Bedienperson gewählten Orientierung und/oder Position des Handterminals (2) relativ zum Standort des Industrieroboters angepasst wird.

15. Verfahren nach Anspruch 1, **dadurch gekennzeichnet, dass** mittels wenigstens einem Anzeigeelement (31; 32) am mobilen Handterminal (4) und/oder am händisch zu führenden Bewegungsvorgabemittel (10) signalisiert wird, ob das mobile Handterminal (4) und das händisch zu führende Bewegungsvorgabemittel (10) datentechnisch oder steuerungstechnisch zu einem Funktionspaar (30) kombiniert sind.

16. Steuerungssystem (1) für Industrieroboter (2), mit einem händisch zu führenden Bewegungsvorgabemittel (10) zum Programmieren oder Vorgeben von Bewegungen oder Abläufen eines Industrieroboters (2), welchem Bewegungsvorgabemittel (10) eine integrierte und/oder externe Sensorik (11; 12) zur Ermittlung der Orientierung und/oder Position des händisch zu führenden Bewegungsvorgabemittels (10) im Raum zugeordnet ist, und welches Bewegungsvorgabemittel (10) zur Generierung von zumindest einem Teil der Daten für die Bewegungssteuerung oder Ablaufprogrammierung eines Industrieroboters (2) vorgesehen ist, **dadurch gekennzeichnet, dass** im oder am händisch zu führenden Bewegungsvorgabemittel (10) und/oder an der externen Sensorik (12) eine erste Datenschnittstelle (13, 13'; 14) angeordnet ist, welche zum Aufbau einer Datenverbindung (15, 15'; 16) und zum Übermitteln von Daten für die Bewegungssteuerung oder Ablaufprogrammierung eines Industrieroboters (2) zu einer korrespondierenden, weiteren Datenschnittstelle (18, 18') an einem von einer Bedienperson zu tragenden, mobilen Handterminal (4) ausgebildet ist, welches mobile Handterminal (4) zur Veränderung und/oder Beobachtung von Zuständen eines Industrieroboters (2) vorgesehen ist, und dass vom händisch zu führenden Bewegungsvorgabemittel (10) ausgehende Steuerbefehle von einem Industrieroboter (2) nur dann ausgeführt werden, wenn wenigstens ein am händisch zu führenden Bewegungsvorgabemittel (10) ausgebildetes Bedienelement (17) zur Auslösung oder Umsetzung von Bewegungs- oder Ablauf-Steuerbefehlen des Bewegungsvorgabemittels (10) betätigt ist und gleichzeitig eine Sicherheitsschalteinrichtung (7) am mobilen Handterminal (4) durch die Bedienperson manuell derart betätigt ist, dass eine Zustimmung zur Ausführung von Bewegungen oder Abläufen oder zur Veränderung von Abläufen des Industrieroboters (2) signalisiert ist.

17. Steuerungssystem nach Anspruch 16, **dadurch gekennzeichnet, dass** die erste Datenschnittstelle (13, 13') des händisch zu führenden Bewegungsvorgabemittels (10) zumindest zur Übertragung von Informationen zumindest über den Betätigungszustand des wenigstens einen Bedienelementes (17) ausgebildet ist.

18. Händisch zu führendes Bewegungsvorgabemittel (10) zum Programmieren oder Vorgeben von Bewegungen oder Abläufen eines Industrieroboters (2), welchem Bewegungsvorgabemittel (10) eine integrierte und/oder externe Sensorik (11; 12) zur Ermittlung der Orientierung und/oder Position des händisch zu führenden Bewegungsvorgabemittels (10) im Raum zugeordnet ist, und welches Bewegungsvorgabemittel (10) zur Generierung von zumindest einem Teil der Daten für die Bewegungssteuerung oder Ablaufprogrammierung eines Industrieroboters (2) vorgesehen ist, **dadurch gekennzeichnet, dass** im oder am händisch zu führenden Bewegungsvorgabemittel (10) eine erste Datenschnittstelle (13, 13') angeordnet ist, welche zum Aufbau einer Datenverbindung (15, 15') und zum Übermitteln von Daten für die Bewegungssteuerung oder Ablaufprogrammierung des Industrieroboters (2) zu einer korrespondierenden, weiteren Datenschnittstelle (18, 18') an einem mobilen Handterminal (4) ausgebildet ist, und dass vom händisch zu führenden Bewegungsvorgabemittel (10) ausgehende Steuerbefehle von dem Industrieroboter (2) nur dann ausführbar sind, wenn mittels wenigstens einem manuell zu betätigenden Bedienelement (17) am händisch zu führenden Bewegungsvorgabemittel (10) eine Ausführung der mit dem Bewegungsvorgabemittel (10) vorgegebenen Bewegungen oder Abläufe des Industrieroboters (2) angezeigt wird.

19. Steuerungssystem (1) für Industrieroboter (2), **dadurch gekennzeichnet, dass** es ein händisch zu führendes Bewegungsvorgabemittel nach Anspruch 18 und ein mobiles Handterminal (4) zur umfassenden Veränderung und/oder Beobachtung von Zuständen eines Industrieroboters (2) umfasst, welches mobile Handterminal (4) wenigstens eine Datenschnittstelle (18, 18') zum Aufbau einer Datenverbindung (15, 15') mit einer korrespondierenden Datenschnittstelle (13, 13') des händisch zu führenden Bewegungsvorgabemittels (10) aufweist.

## Claims

1. A method for programming or specifying motions or sequences of an industrial robot (2), wherein at least part of the data for the motion control or sequence programming of the industrial robot (2) is generated with the aid of a manually guided motion specification means (10) with an integrated and/or external sensor system (11; 12) for determining the orientation and/or position of the manually guided motion specification means (10) in space, **characterized in that** the sensor system (11) integrated into the manually guided motion specification means (10) and/or the external sensor system (12) transmits data for the motion control or sequence programming of the industrial robot (2) to a mobile handheld terminal (4) to be carried by the operator via at least one data interface (13; 14) and at least one associated data link (15; 16), wherein said mobile handheld terminal (4) is provided for changing and/or monitoring operating states of the industrial robot (2), and **in that** control commands issued by the manually guided motion specification means (10) are only executed by the industrial robot (2) if an execution of the motions or sequences of the industrial robot (2) specified with the motion specification means (10) is indicated by means of at least one manually actuated control element (17) on the manually guided motion specification means (10) and a safety switch (7) on the mobile handheld terminal (4) is at the same time manually actuated by the operator in such a way that the consent for executing motions or sequences or for changing sequences of the industrial robot (2) is signaled.

2. The method according to claim 1, **characterized in that** the mobile handheld terminal (4) is used for comprehensively changing and/or monitoring operating states or sequences of the industrial robot (2) and held by a first hand of the operator, and **in that** the manually guided motion specification means (10) is held or guided by the second hand of this operator.

3. The method according to claim 1, **characterized in that** the safety switch (7), particularly at least one consent button (8) with enhanced functional reliability or error protection, is positioned on the mobile handheld terminal (4) in such a way that the operator can hold the mobile handheld terminal (4) and, if necessary, at the same time actuate the safety switch (7), particularly the at least one consent button (8), with only one hand.

4. The method according to claim 1, **characterized in that** information on at least the actuating state of the at least one control element (17) is transmitted to the mobile handheld terminal (4) via the data link (15; 16).

5. The method according to claim 1, **characterized in that** the data link (15; 15') is established by means of a first data interface (13; 13') in the manually guided motion specification means (10) and a corresponding additional data interface (18, 18') in the mobile handheld terminal (4).

6. The method according to claim 1, **characterized in that** data concerning the orientation and/or position of the manually guided motion specification means (10) in space is also transmitted to the mobile handheld terminal (4) via the data link (15; 15'; 16) between the mobile handheld terminal (4) and the manually guided motion specification means (10) in addition to information on the actuating state of the control element (17) in order to start or trigger the corresponding motions or sequences of the industrial robot (2) by the operator.

7. The method according to claim 1, **characterized in that** it is once or repeatedly checked whether the manually guided motion specification means (10) is held or guided by the user, who also holds the mobile handheld terminal (4) and signals the consent for executing potentially hazardous motions or other safety-critical sequences of the industrial robot (2) by means of the safety switch (7), prior to or during the execution of potentially hazardous motions or other safety-critical sequences of the industrial robot (2).

8. The method according to claim 1, **characterized in that** a check as to whether the same person, particularly a single operator, holds the mobile handheld terminal (4) and holds or guides the manually guided motion specification means (10) is carried out by means of a signal transmission from the manually guided motion specification means (10) to the mobile handheld terminal (4), wherein a section of the signal path between the manually guided motion specification means (10) and the mobile handheld terminal (4) is formed by the body of the operator or influenced by the body of the operator.

9. The method according to claim 8, **characterized in that** a signal transmission is only possible or established with sufficient signal strength if the manually guided motion specification means (10), as well as the mobile handheld terminal (4), is in contact with or located in the immediate vicinity of the body of an operator.

10. The method according to claim 1, **characterized in that** it is detected or checked whether the body of a user is simultaneously in contact with the mobile handheld terminal (4), as well as with the manually guided motion specification means (10).

11. The method according to claim 1, **characterized in that** the functionality or the operating state of the motion specification means (10) and/or the handheld terminal (4) and/or the industrial robot (2) is automatically changed, particularly by activating or deactivating an energy-saving mode or a certain operating mode, depending on whether or not the body of an operator is in contact with the motion specification means (10).

12. The method according to claim 1, **characterized in that** the storage of the motion specification means (10) on a storage device (27) on the mobile handheld terminal (4) is technically detected and the functionality or the operating state of the motion specification means (10) and/or the handheld terminal (4) and/or the robot (2) is automatically changed, particularly by activating or deactivating an energy-saving mode or a certain operating mode, depending on the automatically detected storage state of the motion specification means (10).

13. The method according to claim 1, **characterized in that** the manually guided motion specification means (10) is supplied with electrical energy by means of an electrochemical energy source (29) and the electrochemical energy source (29) is charged with electrical energy while the manually guided motion specification means (10) is associated with a storage device (27) on the mobile handheld terminal (4).

14. The method according to claim 1, **characterized in that** the manually guided motion specification means (10) is stored in or on a storage device (27) on the mobile handheld terminal (4) and the effect of at least one control element (6, 6') arranged on the mobile handheld terminal (4) is adapted in dependence on the orientation and/or position of the handheld terminal (2) relative to the location of the industrial robot chosen by the operator in order to control the motion of an industrial robot (2).

15. The method according to claim 1, **characterized in that** at least one indicator element (31; 32) on the mobile handheld terminal (4) and/or on the manually guided motion specification means (10) signals whether the mobile handheld terminal (4) and the manually guided motion specification means (10) are combined into a functional pair (30) in terms of data technology or control technology.

16. A control system (1) for industrial robots (2), comprising a manually guided motion specification means (10) for programming or specifying motions or sequences of an industrial robot (2), wherein an integrated and/or external sensor system (11; 12) for determining the orientation and/or position of the manually guided motion specification means (10) in space is assigned to the motion specification means (10), and wherein said motion specification means (10) is provided for generating at least part of the data for the motion control or sequence programming of an industrial robot (2), **characterized in that** a first data interface (13, 13'; 14) is arranged in or on the manually guided motion specification means (10) and/or on the external sensor system (12) and designed for establishing a data link (15, 15'; 16) and for transmitting data for the motion control or sequence programming of an industrial robot (2) to a corresponding additional data interface (18, 18') on a mobile handheld terminal (4) to be carried by an operator, wherein said mobile handheld terminal (4) is provided for changing and/or monitoring operating states of an industrial robot (2), and **in that** control commands issued by the manually guided motion specification means (10) are only executed by the industrial robot (2) if at least one control element (17) arranged on the manually guided motion specification means (10) is actuated in order to trigger or implement motion or sequence control commands of the motion specification means (10) and a safety switch (7) on the mobile handheld terminal (4) is at the same time manually actuated by the operator in such a way that the consent for executing motions or sequences or for changing sequences of the industrial robot (2) is signaled.

17. The control system according to claim 16, **characterized in that** the first data interface (13, 13') of the manually guided motion specification means (10) is at least designed for transmitting information on at least the actuating state of the at least one control element (17).

18. A manually guided motion specification means (10) for programming or specifying motions or sequences of an industrial robot (2), wherein an integrated and/or external sensor system (11; 12) for determining the orientation and/or position of the manually guided motion specification means (10) in space is assigned to the motion specification means (10), and wherein said motion specification means (10) is provided for generating at least part of the data for the motion control or sequence programming of an industrial robot (2), **characterized in that** a first data interface (13, 13') is arranged in or on the manually guided motion specification means (10) and designed for establishing a data link (15, 15') and for transmitting data for the motion control or sequence programming of the industrial robot (2) to a corresponding additional data interface (18, 18') on a mobile handheld terminal (4), and **in that** control commands issued by the manually guided motion specification means (10) can only be executed by the industrial robot (2) if an execution of the motions or sequences of the industrial robot (2) specified with the motion specification means (10) is indicated by means of at least one manually actuated control element (17) on the manually guided motion specification means (10).

19. A control system (1) for industrial robots (2), **characterized in that** it comprises a manually guided motion specification means according to claim 18 and a mobile handheld terminal (4) for comprehensively changing and/or monitoring operating states of an industrial robot (2), wherein said mobile handheld terminal (4) features at least one data interface (18, 18') for establishing a data link (15, 15') with a corresponding data interface (13, 13') of the manually guided motion specification means (10).

## Revendications

1. Procédé pour programmer ou prescrire des déplacements ou des séquences d'un robot industriel (2), au moins une partie des données pour la commande de déplacements ou la programmation de séquences du robot industriel (2) étant générée par le biais d'un moyen de prescription de déplacements (10) à guider à la main avec un système de capteurs (11 ; 12) intégré et/ou externe pour la détermination de l'orientation et/ou de la position du moyen de prescription de déplacements (10) à guider à la main, **caractérisé en ce que** le système de capteurs (11) intégré dans le moyen de prescription de déplacements (10) à guider à la main et/ou le système de capteurs (12) externe transmet des données pour la commande de déplacements ou la programmation de séquences du robot industriel (2) par le biais d'au moins une interface de données (13 ; 14) et d'au moins une liaison de données (15 ; 16) correspondante à un terminal manuel (4) mobile devant être porté par l'opérateur, lequel terminal manuel (4) mobile est prévu pour la modification et/ou l'observation d'états du robot industriel (2), et **en ce que** des instructions de commande en provenance du moyen de prescription de déplacements (10) à guider à la main ne sont exécutées par le robot industriel (2) que si, au moyen d'au moins un élément de commande (17) devant être actionné manuellement sur le moyen de prescription de déplacements (10) à guider à la main, une exécution des déplacements ou séquences du robot industriel (2) prescrit(e)s avec le moyen de prescription de déplacements (10) est affichée et simultanément un dispositif de commutation de sécurité (7) sur le terminal manuel (4) mobile est actionné manuellement par l'opérateur de telle sorte qu'une autorisation de l'exécution de déplacements ou de séquences, ou de la modification de séquences du robot industriel (2) est signalée.

2. Procédé selon la revendication 1, **caractérisé en ce que** le terminal manuel (4) mobile est mis en oeuvre pour la modification et/ou l'observation approfondies d'états de fonctionnement ou de séquences du robot industriel (2) et est tenu par la première main de l'opérateur, et **en ce que** le moyen de prescription de déplacements (10) à guider à la main est tenu ou guidé par la deuxième main de cet opérateur.

3. Procédé selon la revendication 1, **caractérisé en ce que** le dispositif de commutation de sécurité (7), en particulier au moins une touche d'autorisation (8) avec sécurité fonctionnelle ou contre les erreurs accrue, est positionné sur le terminal manuel (4) mobile de telle sorte qu'une tenue du terminal manuel (4) mobile et en même temps un actionnement en cas de besoin du dispositif de commutation de sécurité (7), en particulier d'au moins une touche d'autorisation (8), sont rendus possibles avec une seule main de l'opérateur.

4. Procédé selon la revendication 1, **caractérisé en ce que** des informations sur au moins l'état d'actionnement de l'élément de commande (17) au moins au nombre de un sont transmises au terminal manuel (4) mobile par le biais de la liaison de données (15 ; 16).

5. Procédé selon la revendication 1, **caractérisé en ce que** la liaison de données (15 ; 15') est établie au moyen d'une première interface de données (13 ; 13') dans le moyen de prescription de déplacements (10) à guider à la main et au moyen d'une autre interface de données (18, 18') correspondante dans le terminal manuel (4) mobile.

6. Procédé selon la revendication 1, **caractérisé en ce que**, par le biais de la liaison de données (15 ; 15' ; 16) entre le terminal manuel (4) mobile et le moyen de prescription de déplacements (10) à guider à la main, en plus d'informations sur l'état d'actionnement de l'élément de commande (17) pour le lancement ou déclenchement côté opérateur des déplacements ou séquences correspondant(e)s du robot industriel (2), des données concernant l'orientation et/ou la position du moyen de prescription de déplacements (10) à guider à la main dans l'espace sont également transmises au terminal manuel (4) mobile.

7. Procédé selon la revendication 1, **caractérisé en ce que**, avant ou pendant l'exécution de déplacements potentiellement dangereux ou d'autres séquences critiques pour la sécurité du robot industriel (2), il est vérifié une fois ou de façon répétée si le moyen de prescription de déplacements (10) à guider à la main est tenu ou guidé par l'opérateur qui tient également le terminal manuel (4) mobile et signale, au moyen du dispositif de commutation de sécurité (7), une autorisation de l'exécution de déplacements potentiellement dangereux ou d'autres séquences critiques pour la sécurité du robot industriel (2).

8. Procédé selon la revendication 1, **caractérisé en ce qu'**une vérification portant sur la tenue du terminal manuel (4) mobile et la tenue ou le guidage du moyen de prescription de déplacements (10) à guider à la main est effectuée par la même personne, en particulier par un opérateur unique, au moyen d'une transmission de signaux à partir du moyen de prescription de déplacements (10) à guider à la main vers le terminal manuel (4) mobile, un tronçon partiel du chemin des signaux entre le moyen de prescription de déplacements (10) à guider à la main et le terminal manuel (4) mobile étant formé par le corps de l'opérateur ou étant influencé par le corps de l'opérateur.

9. Procédé selon la revendication 8, **caractérisé en ce qu'**une transmission de signaux n'est rendue possible, ou bien ne peut être établie avec une puissance de signaux suffisante, qu'en cas de contact corporel ou bien en cas de proximité immédiate du corps d'un opérateur avec le moyen de prescription de déplacements (10) à guider à la main ainsi qu'avec le terminal manuel (4) mobile.

10. Procédé selon la revendication 1, **caractérisé en ce qu'**une présence simultanée d'un contact corporel par un opérateur est détectée ou vérifiée vis-à-vis du terminal manuel (4) mobile ainsi que vis-à-vis du moyen de prescription de déplacements (10) à guider à la main.

11. Procédé selon la revendication 1, **caractérisé en ce que**, en fonction de l'absence et de la présence d'un contact corporel entre un opérateur et le moyen de prescription de déplacements (10) à guider à la main, le mode de fonctionnement ou l'état de fonctionnement du moyen de prescription de déplacements (10) et/ou du terminal manuel (4) et/ou du robot industriel (2) est modifié automatiquement, en particulier un mode d'économie d'énergie ou un mode de commande défini est activé et désactivé.

12. Procédé selon la revendication 1, **caractérisé en ce qu'**une pose du moyen de prescription de déplacements (10) sur un dispositif de pose (27) sur le terminal manuel (4) mobile est détectée techniquement et, en fonction de l'état de pose, constaté automatiquement, du moyen de prescription de déplacements (10), le mode de fonctionnement ou l'état de fonctionnement du moyen de prescription de déplacements (10) et/ou du terminal manuel (4) et/ou du robot (2) est modifié automatiquement, en particulier un mode d'économie d'énergie ou un mode de commande défini est activé et désactivé.

13. Procédé selon la revendication 1, **caractérisé en ce que** le moyen de prescription de déplacements (10) à guider à la main est alimenté en énergie électrique au moyen d'une source d'énergie (29) électrochimique, et la source d'énergie (29) électrochimique est chargée en énergie électrique pendant une affectation du moyen de prescription de déplacements (10) à guider à la main à un dispositif de pose (27) sur le terminal manuel (4) mobile.

14. Procédé selon la revendication 1, **caractérisé en ce que** le moyen de prescription de déplacements (10) à guider à la main est posé dans ou sur un dispositif de pose (27) sur le terminal manuel (4) mobile, et l'action d'au moins un élément de commande (6, 6') disposé sur le terminal manuel (4) mobile pour la commande de déplacements d'un robot industriel (2) est adaptée en fonction de l'orientation et/ou de la position du terminal manuel (2) choisie par l'opérateur relativement à l'emplacement du robot industriel (2).

15. Procédé selon la revendication 1, **caractérisé en ce que**, au moyen d'au moins un élément d'affichage (31 ; 32) sur le terminal manuel (4) mobile et/ou sur le moyen de prescription de déplacements (10) à guider à la main, il est signalé si le terminal manuel (4) mobile et le moyen de prescription de déplacements (10) à guider à la main sont combinés pour former une paire fonctionnelle (30) par voie de données ou par voie de commande.

16. Système de commande (1) pour robots industriels (2), avec un moyen de prescription de déplacements (10) à guider à la main pour la programmation ou la prescription de déplacements ou de séquences d'un robot industriel (2), auquel moyen de prescription de déplacements (10) est affecté un système de capteurs (11 ; 12) intégré et/ou externe pour la détermination de l'orientation et/ou de la position du moyen de prescription de déplacements (10) à guider à la main dans l'espace, et lequel moyen de prescription de déplacements (10) est prévu pour la génération d'au moins une partie des données pour la commande de déplacements ou la programmation de séquences d'un robot industriel (2), **caractérisé en ce que**, dans ou sur le moyen de prescription de déplacements (10) à guider à la main et/ou sur le système de capteurs (12) externe, il est disposé une première interface de données (13, 13' ; 14) qui est constituée pour l'établissement d'une liaison de données (15, 15'; 16) et pour la transmission de données pour la commande de déplacements ou la programmation de séquences d'un robot industriel (2) vers une autre interface de données (18, 18') correspondante sur un terminal manuel (4) mobile devant être porté par un opérateur, lequel terminal manuel (4) mobile est prévu pour la modification et/ou l'observation d'états d'un robot industriel (2), et **en ce que** des instructions de commande en provenance du moyen de prescription de déplacements (10) à guider à la main ne sont exécutées par un robot industriel (2) que si au moins un élément de commande (17) constitué sur le moyen de prescription de déplacements (10) à guider à la main est actionné pour le déclenchement ou la mise en oeuvre d'instructions de commande de déplacements ou de séquences du moyen de prescription de déplacements (10) et simultanément un dispositif de commutation de sécurité (7) sur le terminal manuel (4) mobile est actionné manuellement par l'opérateur de telle sorte qu'une autorisation de l'exécution de déplacements ou de séquences ou de la modification de séquences du robot industriel (2) est signalée.

17. Système de commande selon la revendications 16, **caractérisé en ce que** la première interface de données (13, 13') du moyen de prescription de déplacements (10) à guider à la main est constituée au moins pour la transmission d'informations au moins sur l'état d'actionnement de l'élément de commande (17) au moins au nombre de un.

18. Moyen de prescription de déplacements (10) à guider à la main pour la programmation ou la prescription de déplacements ou de séquences d'un robot industriel (2), auquel moyen de prescription de déplacements (10) est affecté un système de capteurs (11 ; 12) intégré et/ou externe pour la détermination de l'orientation et/ou de la position du moyen de prescription de déplacements (10) à guider à la main dans l'espace, et lequel moyen de prescription de déplacements (10) est prévu pour la génération d'au moins une partie des données pour la commande de déplacements ou la programmation de séquences d'un robot industriel (2), **caractérisé en ce que**, dans ou sur le moyen de prescription de déplacements (10) à guider à la main, il est disposé une première interface de données (13, 13') qui est constituée pour l'établissement d'une liaison de données (15, 15') et pour la transmission de données pour la commande de déplacements ou la programmation de séquences du robot industriel (2) vers une autre interface de données (18, 18') correspondante sur un terminal manuel (4) mobile, et **en ce que** des instructions de commande en provenance du moyen de prescription de déplacements (10) à guider à la main ne peuvent être exécutées par le robot industriel (2) que si, au moyen d'au moins un élément de commande (17) devant être actionné manuellement sur le moyen de prescription de déplacements (10) à guider à la main, une exécution des déplacements ou séquences du robot industriel (2) prescrits avec le moyen de prescription de déplacements (10) est affichée.

19. Système de commande (1) pour robots industriels (2), **caractérisé en ce qu'**il comprend un moyen de prescription de déplacements (10) à guider à la main selon la revendication 18 et un terminal manuel (4) mobile pour une modification et/ou observation étendue d'états d'un robot industriel (2), lequel terminal manuel (4) mobile présente au moins une interface de données (18, 18') pour l'établissement d'une liaison de données (15, 15') avec une interface de données (13, 13') correspondante du moyen de prescription de déplacements (10) à guider à la main.
